# EUROPEAN PATENT SPECIFICATION

(11) **EP 2 947 127 B1**
(45) Date of publication and mention of the grant of the patent: **18.03.2020**
(21) Application number: 13872031.3
(22) Date of filing: 18.01.2013
(51) Int. Cl.: C09J 153/02, C09J 7/20, C09J 123/14

(54) **SELF-ADHESIVE COMPOSITION, SELF-ADHESIVE SHEET, METHOD FOR PRODUCING SELF-ADHESIVE SHEETS AND USE OF A SELF-ADHESIVE SHEET**
SELBSTKLEBENDE ZUSAMMENSETZUNG, SELBSTKLEBENDE FOLIE, VERFAHREN ZUR HERSTELLUNG VON SELBSTKLEBENDEN FOLIEN UND VERWENDUNG EINER SELBSTKLEBENDEN FOLIE
COMPOSITION AUTO-ADHÉSIVE, FEUILLE AUTO-ADHÉSIVE, PROCÉDÉ DE FABRICATION DE FEUILLES AUTO-ADHÉSIVES ET UTILISATION D'UNE FEUILLE AUTO-ADHÉSIVE

(43) Date of publication of application: 25.11.2015
(73) Proprietor: Nichiban Company Limited, Bunkyo-ku Tokyo 112-8663 (JP)
(72) Inventor: ENDO, Mikihiro, Tokyo 112-8663 (JP); SUGIYAMA, Yusuke, Tokyo 112-8663 (JP); HONMA, Hiraku, Tokyo 112-8663 (JP)
(74) Representative: Müller-Boré & Partner Patentanwälte PartG mbB
(86) International application number: PCT/JP2013/050901
(87) International publication number: WO 2014/112097

(56) References cited:
- WO-A1-2008/149708
- WO-A1-2009/113153
- WO-A1-2013/011561
- JP-A- 2009 241 477

## Description

The present invention relates to a novel self-adhesive composition, a self-adhesive sheet comprising the self-adhesive composition, a method for producing the self-adhesive sheets, and a use of a self-adhesive sheet.

Self-adhesive compositions containing a styrene elastomer which is used in self-adhesive sheets for surface protection are proposed in the art.

Patent Literature 1 discloses a pressure-sensitive adhesive from the viewpoint of workability that is based on a copolymer obtained by hydrogenating a mixture of polymers having a styrene polymer block and a conjugated diene polymer block.

Patent Literature 2 discloses a self-adhesive agent including a hydrogenated styrene (1-50 wt%)-diene hydrocarbon (99-50 wt%) random copolymer and an amorphous polypropylene elastomer in a specific ratio.

Patent Literature 3 discloses a self-adhesive composition which includes an amorphous olefin copolymer, a crystalline olefin polymer and a hydrogenated styrene block copolymer in a specific ratio and has a maximum value of tanδ at 10 Hz in the range of 0.2 or more and less than 1.0.

Patent Literature 4 discloses a surface protective film that includes a self-adhesive layer containing a styrene elastomer having a vinyl-isoprene block, a polyolefin and a tackifier, the self-adhesive layer having a specific hardness (Martens hardness).

Patent Literature 1: Japanese Patent Publication No. H5-74627
Patent Literature 2: Japanese Patent No. 4275191
Patent Literature 3: Japanese Patent Application Kokai Publication No. 2006-188646
Patent Literature 4: Japanese Patent Application Kokai Publication No. 2010-126711

However, the self-adhesive sheets for surface protection described above are sometimes subjected to severe high temperature conditions such as, for example, when used for top coatings on the surface of coat-finished car bodies that are exposed to the outdoor in the hot sun. The use under such high temperature conditions has expanded beyond Japan, and the protective sheets are recently used outdoors in the scorching sun in countries near the equator.

It is known that the removal of a self-adhesive sheet that has been applied to a coating leaves traces (unevenness on the surface of the coating, and deformation of the coating) particularly at contact interfaces (wrinkles or trapped bubbles) between the coating and the sheet. Such traces on the coatings become more noticeable (the size of unevenness is increased) by the presence of water such as rain. This problem too is not only encountered in Japan but tends to be more serious in rainy overseas regions. Thus, there have been demands for the remedy of traces (hereinafter, also referred to as marks or coating deformation) left on the coatings in the presence of water.

The styrene copolymer disclosed in Patent Literature 1 significantly increases adhesive strength with time, has poor peelability, and causes the occurrence of marks to have low waterproofness.

The self-adhesive agent disclosed in Patent Literature 2 has been found to leave residual adhesive when the agent applied to an adherend is exposed to severe conditions such as temperatures exceeding 70°C, and further has poor waterproofness.

The self-adhesive composition disclosed in Patent Literature 3 is a hard self-adhesive agent. Such hard self-adhesive agents have been found to tend to leave conspicuous marks under high temperature conditions as compared to soft self-adhesive agents, and further have low waterproofness under high temperature conditions.

The self-adhesive composition disclosed in Patent Literature 4 is a hard self-adhesive agent and leaves noticeable marks under high temperature conditions or in the presence of water.

The present invention has an object of providing a self-adhesive composition which can form a self-adhesive sheet that is resistant to separation during use (hereinafter, also referred to as having good adhesive strength), is unlikely to cause residual adhesive (hereinafter, also referred to as having clean adhesive removability) when exposed to a high temperature of 90°C, and reduces marks even in the presence of water (hereinafter, also referred to as having good waterproofness). The present invention has another object of providing a self-adhesive sheet including the self-adhesive composition, and a method for producing the self-adhesive sheets.

The present invention and embodiments thereof are defined in the claims.

According to the present invention, there may be provided a self-adhesive composition which can form a self-adhesive sheet that is resistant to separation during use (hereinafter, also referred to as having good adhesive strength), is unlikely to cause residual adhesive when exposed to a high temperature of 90°C, and exhibits good waterproofness even in the presence of water, as well as a self-adhesive sheet comprising the self-adhesive composition, and a method for producing the self-adhesive sheets.

### [Self-adhesive compositions]

An inventive self-adhesive composition (hereinafter, also referred to as self-adhesive composition) according to an aspect of the present invention comprises:
a styrene elastomer (component A), and
an amorphous polypropylene elastomer (component B),
wherein the component A is a hydrogenated product of a block copolymer formed by copolymerization of:
   a polymer block I of units derived from styrene, wherein the unit of the polymer is represented by Formula (1) below: 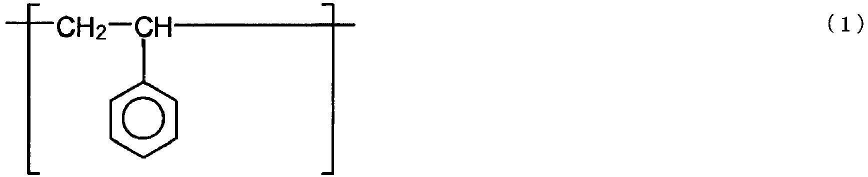
   a polymer block II formed by 1,2-vinyl polymerization of isoprene (diene compound 1), wherein the unit of the polymer is represented by Formula (2) below: 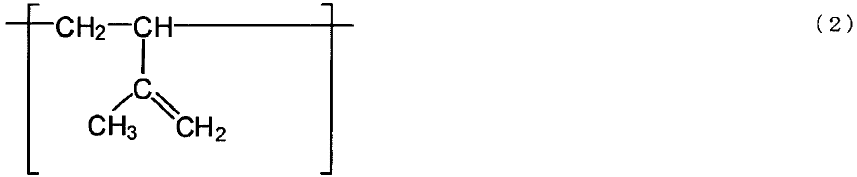
   a polymer block III having double bonds in the polymer main chain, formed by 1,4-addition polymerization of isoprene (diene compound 1), wherein the unit of the polymer is represented by Formula (3) below: 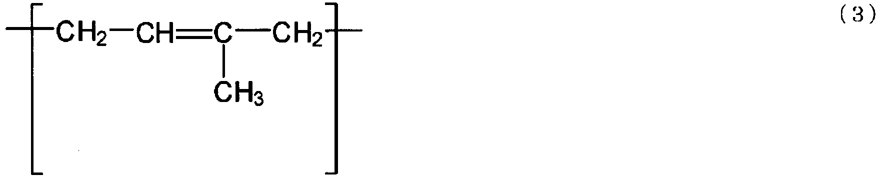
   a polymer block IV formed by 1,2-vinyl polymerization of 1,3-butadiene (diene compound 2), wherein the unit of the polymer is represented by Formula (4) below: 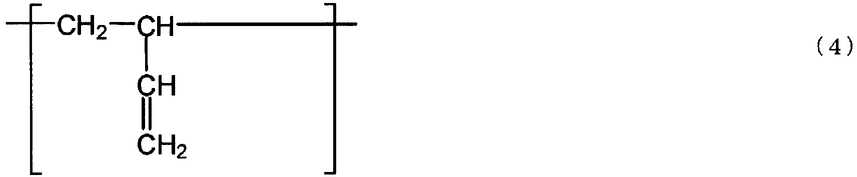
   and a polymer block V having double bonds in the polymer main chain, formed by 1,4-addition polymerization of 1,3-butadiene (diene compound 2), wherein the unit of the polymer is represented by Formula (5) below: 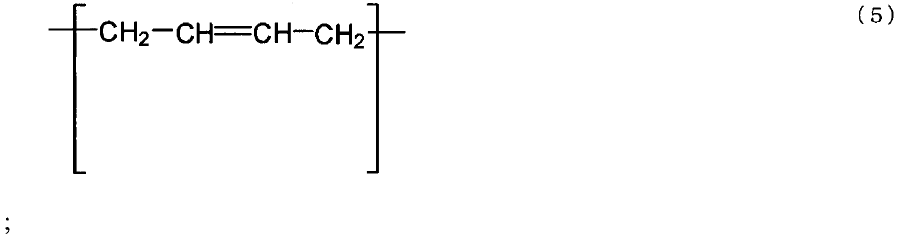
   the polymer block I comprises 90 mol% or more of the styrene compound-derived units,
   the polymer block II comprises 90 mol% or more of units derived from the diene compound 1,
   the polymer block III comprises 90 mol% or more of units derived from the diene compound 1,
   the polymer block IV comprises 90 mol% or more of units derived from the diene compound 2, and
   the polymer block V comprising 90 mol% or more of units derived from the diene compound 2;
   the self-adhesive composition has a [tanδ]ₚₘₐₓ of 1.1 to 3.0 as measured by Standard Test 1, the content of the component A is 50 to 80 wt% relative to the total of the components A and B taken as 100 wt%.

In Standard Test 1, the press machine that is used is preferably "10-Ton Desktop Test Press Machine" (Gonno Yuatsuki Seisakusho K.K.) or one having a load scale corresponding to that of the above press machine (10 ton), and the viscoelastometer is preferably "Physica MCR301" (product name, manufactured by Anton Paar) or one having a measurement accuracy corresponding to that of "Physica MCR301".

In Examples and Comparative Examples, "10-Ton Desktop Test Press Machine" (Gonno Yuatsuki Seisakusho K.K.) was used as the press machine, and "Physica MCR301" (product name, manufactured by Anton Paar) was used as the viscoelastometer.

The term "vinyl polymerization" is used in the present specification in accordance with the definition of "vinyl polymerization" described in Koubunshi Jiten (Polymer Dictionary) (edited by The Society of Polymer Science, Japan, published from Asakura Publishing Co., Ltd., first printed on June 30, 1971). Specifically, the term refers to 1,2-polymerization wherein 1,2-double bonds of vinyl monomers (vinyl compounds (CH₂=CHX), vinylidene compounds (CH₂=CXY) and vinylene compounds (CHX=CHY)) is opened to polymerize. For example, it is distinguished from 1,4-polymerization of butadiene.

The term "elastomer" used in the present specification may be understood as being in accordance with the description of "elastomer" in Koubunshi Jiten (Polymer Dictionary) (edited by The Society of Polymer Science, Japan, published from Asakura Publishing Co., Ltd., first printed on June 30, 1971). Specifically, the term refers to an elastic high-molecular material which preferably exhibits, at normal temperature (for example, 20°C), a Young's elastic modulus of 10⁶ to 10⁹ dyn/cm², a tensile strength of not less than 5 kg/cm² and an elongation of not less than 100%, and which is preferably deformed easily by the application of external forces and substantially returns to the original shape quickly after the removal of such forces.

The occurrence of residual adhesive after the removal of a self-adhesive sheet comprising a conventional self-adhesive composition which does not contain the component A may be reduced by selecting a styrene elastomer different from the component A such that the self-adhesive composition has a low [tanδ]ₚₘₐₓ. However, it is difficult for this self-adhesive sheet to achieve good waterproofness at the same time (see, for example, Comparative Example 1 described later). Further, the waterproofness of a self-adhesive sheet comprising a conventional self-adhesive composition may be enhanced by the addition of a softener and a tackifier, etc. described later. However, this approach then encounters a difficulty in reducing the occurrence of residual adhesive at the same time (see, for example, Comparative Example 2 described later).

The inventive self-adhesive composition (hereinafter, also referred to as the self-adhesive composition) comprises the component A that is a specific styrene elastomer, and the component B that is an amorphous polypropylene elastomer in the aforementioned specific range of content. This configuration makes it possible for an inventive self-adhesive sheet comprising the self-adhesive composition (hereinafter, also referred to as the self-adhesive sheet) to satisfy high levels of clean adhesive removability and waterproofness even without the use of softeners or tackifiers (see, for example, Example 1 described later).

The self-adhesive sheet achieves further enhanced waterproofness while maintaining a high level of clean adhesive removability by configuring the self-adhesive composition of the invention such that:
the [tanδ]ₚₘₐₓ of the self-adhesive composition according to an aspect of the present invention is controlled to 1.1 to 3.0, the content of the component A is 50 to 80 wt%, and preferably 60 to 70 wt% relative to the total of the components A and B taken as 100 wt%; and
more preferably, the [tanδ]ₚₘₐₓ is controlled to 1.1 to 3.0 by adding a specific softener and/or a specific tackifier described later (see, for example, Example 2 described later).
In the self-adhesive composition according to an aspect of the present invention, part of the component A is replaced by a crystalline polyolefin (component C), and the contents of the components A, B and C are controlled to specific ranges described later. In this manner, the clean adhesive removability and the waterproofness of the self-adhesive sheet may be satisfied both at higher levels (see, for example, Example 3 described later).

In order to satisfy the clean adhesive removability and the waterproofness of the self-adhesive sheet both at high levels, the total amount of the components A and B in the self-adhesive composition excluding the total of a softener and a tackifier described later is:
while the [tanδ]ₚₘₐₓ is 1.1 to 3.0 in the self-adhesive composition according to an aspect of the present invention, the total amount is preferably 55 to 80 wt%, more preferably 60 to 80 wt%, and still more preferably 60 to 70 wt%.

### (Component A)

The component A is a hydrogenated product of a block copolymer formed by copolymerization of:
a polymer block I of units derived from styrene, wherein the unit of the polymer is represented by Formula (1) below: 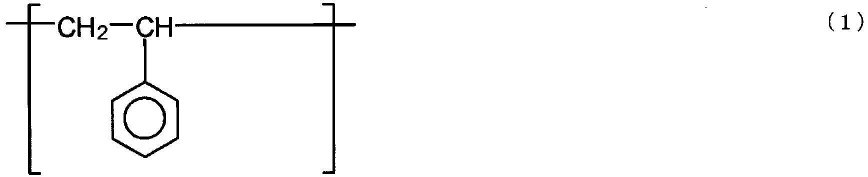
a polymer block II formed by 1,2-vinyl polymerization of isoprene (diene compound 1), wherein the unit of the polymer is represented by Formula (2) below: 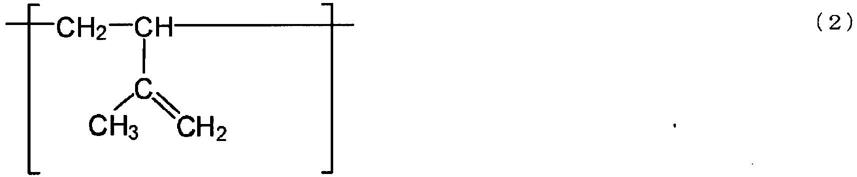
a polymer block III having double bonds in the polymer main chain, formed by 1,4-addition polymerization of isoprene (diene compound 1), wherein the unit of the polymer is represented by Formula (3) below: 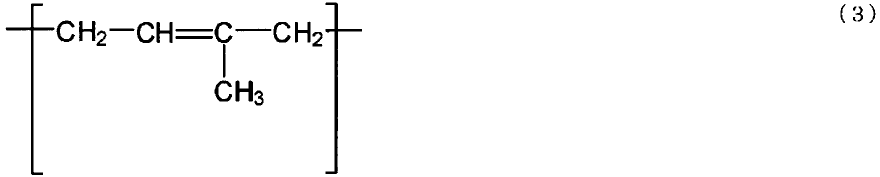
a polymer block IV formed by 1,2-vinyl polymerization of 1,3-butadiene (diene compound 2), wherein the unit of the polymer is represented by Formula (4) below: 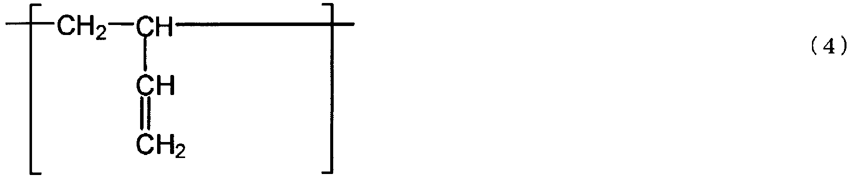
and a polymer block V having double bonds in the polymer main chain, formed by 1,4-addition polymerization of 1,3-butadiene (diene compound 2), wherein the unit of the polymer is represented by Formula (5) below: 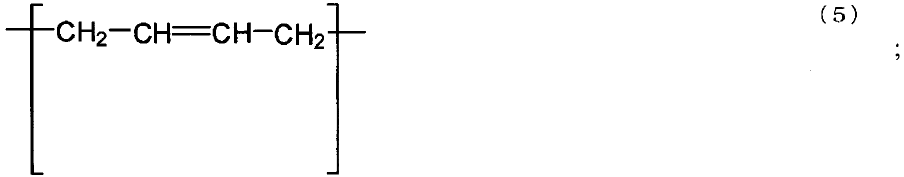
the polymer block I comprises 90 mol% or more of the styrene compound-derived units,
the polymer block II comprises 90 mol% or more of units derived from the diene compound 1,
the polymer block III comprises 90 mol% or more of units derived from the diene compound 1,
the polymer block IV comprises 90 mol% or more of units derived from the diene compound 2, and
the polymer block V comprises 90 mol% or more of units derived from the diene compound 2.

In the self-adhesive composition, the component A serves as a base polymer of the self-adhesive agent and is probably responsible for the hardness and the retention of the self-adhesive agent.

The combined use of the component A with the component B in the specific range of content results in a larger [tanδ]ₚₘₐₓ (a lower hardness of the self-adhesive agent) than self-adhesive compositions containing a conventional styrene elastomer in place of the component A. Thus, the occurrence of marks after the removal of the self-adhesive sheet may be reduced.

From the viewpoints of the clean adhesive removability and the waterproofness of the self-adhesive composition, it is preferable that the contents of:
the units derived from the styrene compound in the polymer block I,
the units derived from the diene compound 1 in the polymer block II,
the units derived from the diene compound 1 in the polymer block III,
the units derived from the diene compound 2 in the polymer block IV, and
the units derived from the diene compound 2 in the polymer block V
be each not less than 95 mol%, more preferably not less than 97 mol%, still more preferably not less than 99 mol%, further preferably not less than 99.5 mol%, still further preferably not less than 99.9 mol%, and even further preferably 100 mol%.

From the viewpoints of the clean adhesive removability and the waterproofness of the self-adhesive composition,
units in the polymer block I other than the units derived from the styrene compound are preferably derived from a compound copolymerizable with the styrene compound.

From the viewpoints of the clean adhesive removability and the waterproofness of the self-adhesive composition,
units in the polymer blocks II and III other than the units derived from the diene compound 1 are preferably derived from a compound copolymerizable with the diene compound 1, more preferably derived from a diene compound different from the diene compound 1, and still more preferably derived from the diene compound 2.

From the viewpoints of the clean adhesive removability and the waterproofness of the self-adhesive composition,
units in the polymer blocks IV and V other than the units derived from the diene compound 2 are preferably derived from a compound copolymerizable with the diene compound 2, more preferably derived from a diene compound different from the diene compound 2, and still more preferably derived from the diene compound 1.

The styrene compound is a vinyl aromatic compound.
From the viewpoints of the clean adhesive removability and the waterproofness of the self-adhesive composition,
the styrene compound is styrene.

The diene compounds 1 and 2 are conjugated diene compounds.
From the viewpoints of the clean adhesive removability and the waterproofness of the self-adhesive composition,
the diene compound 1 and the diene compound 2 are isoprene and 1,3-butadiene, respectively.

From the viewpoints of the clean adhesive removability and the waterproofness of the self-adhesive composition,
the polymer block II and the polymer block IV are formed by 1,2-vinyl polymerization of the diene compound 1 and the diene compound 2, respectively, and
the polymer block III and the polymer block V are formed by 1,4-addition polymerization of the diene compound 1 and the diene compound 2, respectively.

The component A is a hydrogenated product of a block copolymer obtained by copolymerization of:
a polymer block I of units derived from styrene, wherein the units of the polymer is represented by Formula (1) below: 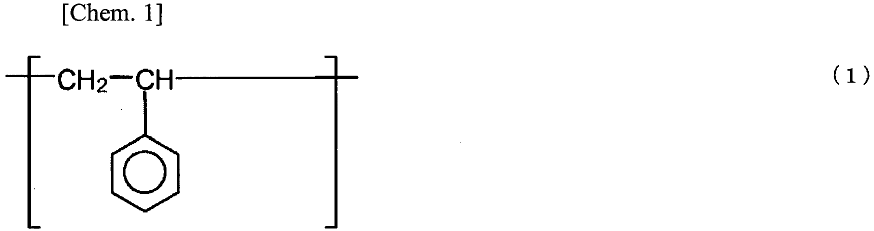
a polymer block II formed by 1,2-vinyl polymerization of isoprene (diene compound 1), wherein the units of the polymer is represented by Formula (2) below: 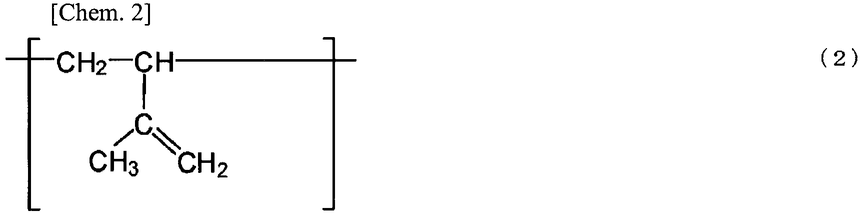
a polymer block III having double bonds in the polymer main chain, formed by 1,4-addition polymerization of isoprene (diene compound 1), wherein the units of the polymer is represented by Formula (3) below: 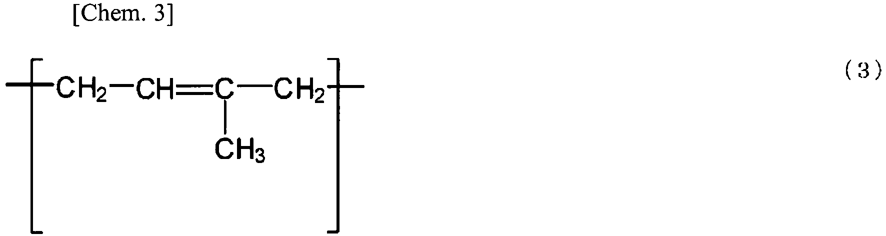
a polymer block IV formed by 1,2-vinyl polymerization of 1,3-butadiene (diene compound 2), wherein the units of the polymer is represented by Formula (4) below: 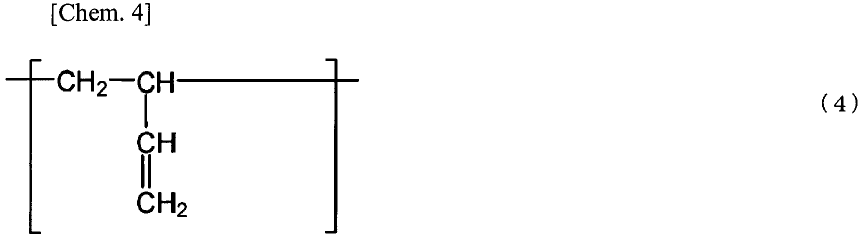
and a polymer block V having double bonds in the polymer main chain, formed by 1,4-addition polymerization of 1,3-butadiene (diene compound 2), wherein the units of the polymer is represented by Formula (5) below:

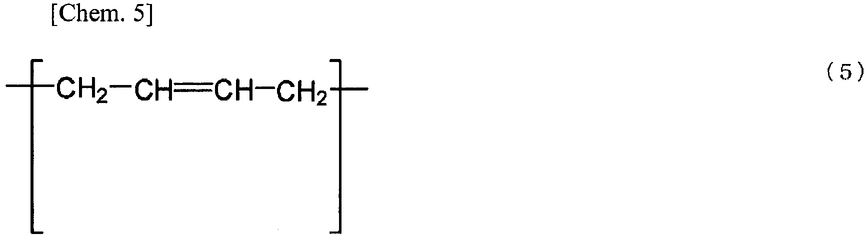

### (Component B)

The component B is a polymer formed by polymerization of at least propylene. The component B is a polypropylene elastomer (excluding the component A) which does not show a peak having a heat of crystal melting of 1 J/g or more, and preferably which does not show a peak having a heat of crystal melting of 0.5 J/g or more as measured by DSC (differential scanning calorimetry, heating rate 5°C/min) in the range of 20 to 250°C in accordance with JIS K7122. The component is considered to serve in the self-adhesive composition to adjust the suitability with respect to coatings (to reduce the occurrence of streaks, dullness, fouling (tarnishing), and steps formed at wrinkles or trapped bubbles at a site on which the coatings are applied, when being subjected to tests such as heat resistance test, humidity resistance test, accelerated weather resistance test and outdoor weather resistance test).

The combined use of the component B with the component A in the specific range of content results in a larger [tanδ]ₚₘₐₓ (a lower hardness of the self-adhesive agent) than conventional self-adhesive compositions. Thus, the occurrence of residual adhesive after the removal of the self-adhesive sheet may be reduced.

The polypropylene elastomer is a propylene-α-olefin copolymer elastomer which comprises units derived from polypropylene and units derived from another α-olefin (except ethylene).

Preferred examples of the α-olefins other than polypropylene include α-olefins having 4 to 20 carbon atoms such as 1-butene, 1-pentene, 1-hexene, 4-methyl-1-pentene and 1-octene. α-Olefins having 4 to 10 carbon atoms are more preferable.

Where necessary, the component B may further include at least one kind of units selected from the group consisting of units derived from polyene compounds such as butadiene, isoprene, ethylidenenorbornene and dicyclopentadiene, units derived from cycloolefins and units derived from vinyl aromatic compounds.

Preferred examples of the components B include propylene·1-butene copolymer, propylene·cycloolefin copolymer, propylene·butadiene copolymer and propylene·1-butene·styrene copolymer, with propylene·1-butene copolymer being more preferable.

Preferred examples of the components B available in the market include TAFTHREN X1102 (manufactured by Sumitomo Chemical Co., Ltd.) having a very low weight proportion of crystals.

### ([tanδ]ₚₘₐₓ, Tg and specific adhesive strength)

To ensure that the self-adhesive sheet maintains a high level of clean adhesive removability at high temperatures and achieves enhanced waterproofness, the [tanδ]ₚₘₐₓ of the self-adhesive composition according to an aspect of the present invention is 1.1 to 3.0, more preferably 1.2 to 2.7, still more preferably 1.3 to 2.5, and further preferably 1.3 to 2.0.

From the viewpoints of heat resistance and cold resistance, the self-adhesive composition preferably has a glass transition point Tg of -60 to 20°C, more preferably -50 to 15°C, and still more preferably -40 to 10°C as measured by Standard Test 2 described below.

### [Standard Test 2]

(1) The self-adhesive composition is formed into a 1 mm thick sheet with 10-Ton Desktop Test Press Machine (Gonno Yuatsuki Seisakusho K.K.) at 160°C and a pressure of 40 kgf/cm², and the sheet is cut to give a test sheet for the measurement of Tg.
(2) The test sheet is tested on a viscoelastometer (product name Physica MCR301, manufactured by Anton Paar) at a measurement frequency of 1 Hz, a swing angle γ of 0.05%, measurement temperatures of -30°C to 100°C (the measurement is performed at increasing temperatures) and a heating rate of 5°C/min to determine the Tg of the test sheet as the Tg of the self-adhesive composition.

To reduce the occurrence of residual adhesive of the self-adhesive sheet at high temperatures, the self-adhesive composition of the present invention preferably has an adhesive strength measured by Standard Test 3 described below (hereinafter, also referred to as the specific adhesive strength) of 1.0 to 8.0 N/25 mm, more preferably 1.5 to 7.0 N/25 mm, still more preferably 2.0 to 6.0 N/25 mm, and further preferably 2.0 to 5.5 N/25 mm.

### [Standard Test 3]

(1) The adhesive strength was determined by measuring the 180° peel strength by a method in accordance with JIS Z0237 2000.
(2) A 25 mm wide self-adhesive sheet was applied to a BASUS plate and was compression bonded thereto by moving thereon a 1 kg compression roller back and forth one time. After 5 minutes, the 180° peel strength was determined at a tensile speed of 0.3 m/min.

The [tanδ]ₚₘₐₓ, the Tg and the specific adhesive strength may be controlled to the aforementioned preferred ranges based on known findings by the contents of the components A and B or by adding to the components A and B a styrene elastomer other than the component A, a component C described later, or other known resins suited for self-adhesive agents. However, they are preferably adjusted to the preferred ranges by adding to the self-adhesive composition a softener described later that serves to adjust the hardness and the tackiness at low temperatures (for example, -30°C to 0°C) of the self-adhesive agent, and further the preferred specific adhesive strength is adjusted by adding to the self-adhesive composition a tackifier described later (a substance having a function to impart tackiness to thermoplastic elastomers).

### (Softeners)

The softener is preferably at least one selected from the group consisting of oils, paraffin waxes, low-molecular weight polybutenes, low-molecular weight polyisoprenes and low-molecular weight polyisobutylenes.

Examples of the paraffin waxes used as the softeners include paraffin waxes and polyethylene waxes, with specific examples including 125°F Paraffin (trade name) manufactured by JX Nippon Oil & Energy Corporation.

Examples of the low-molecular weight polyisoprenes used as the softeners include liquid polyisoprenes having a viscosity average molecular weight of about several thousands to about 60000, with specific examples including KURAPRENE LIR (trade name) manufactured by KURARAY CO., LTD.

Examples of the low-molecular weight polyisobutylenes used as the softeners include polyisobutylenes having a viscosity average molecular weight of about 5000 to about 50000, with specific examples including TETRAX 3T (trade name) manufactured by JX Nippon Oil & Energy Corporation.

Examples of the low-molecular weight polyolefins used as the softeners include polyolefins having a viscosity average molecular weight of about 5000 to about 50000, with specific examples including low-molecular weight polyethylene products such as EPOLENE (trade name) manufactured by Eastman Chemicals and low-molecular weight polypropylene products such as APP.

### (Tackifiers)

The "tackifiers" used in the invention are substances which, when added to thermoplastic elastomers, have a function to impart tackiness to the thermoplastic elastomers. As the tackifier, at least one selected from the group consisting of rosin resins, terpene resins, coumarone·indene resins, styrene resins, aliphatic, alicyclic or aromatic petroleum resins, and hydrogenated products of these resins may be used.

To ensure that the [tanδ]ₚₘₐₓ of the self-adhesive composition according to an aspect of the present invention falls in the range of 1.1 to 3.0,
the softener is preferably added in an amount of 1 to 100 parts by weight, more preferably 3 to 90 parts by weight, still more preferably 5 to 80 parts by weight, further preferably 10 to 70 parts by weight, still further preferably 15 to 60 parts by weight, even more preferably 20 to 50 parts by weight, and even further preferably 25 to 40 parts by weight,
with respect to 100 parts by weight of the total of the components A and B in an embodiment of the use of a self-adhesive sheet according to an aspect of the present invention (when the composition comprises a component C described later as in the composition according to an aspect of the present invention, the total of the components A, B and C).

To ensure that the specific adhesive strength of the self-adhesive composition falls in the aforementioned preferred range,
the tackifier is preferably added in an amount of 1 to 50 parts by weight, more preferably 5 to 40 parts by weight, still more preferably 10 to 35 parts by weight, and further preferably 15 to 30 parts by weight,
with respect to 100 parts by weight of the total of the components A and B in the use of a self-adhesive sheet according to an aspect of the present invention (when the composition comprises a component C described later as in the composition according to an aspect of the present invention, the total of the components A, B and C).

### (Component C)

In order to ensure that the self-adhesive composition of the invention satisfies both clean adhesive removability and waterproofness of the self-adhesive sheet at higher levels,
a part of the component A is replaced by a component C in the composition according to an aspect of the present invention while controlling the [tanδ]ₚₘₐₓ (preferably, further the Tg and/or the specific adhesive strength) of the self-adhesive composition of the invention to the aforementioned preferred ranges.

The component C is a polymer formed by polymerization of an olefin monomer. The polymer is such that the units formed by polymerization of the olefin monomer give rise to a peak having a heat of crystal melting of 1 J/g or more, and preferably 2 J/g or more as measured by DSC (differential scanning calorimetry, heating rate 5°C/min) in the range of 20 to 250°C in accordance with JIS K7122.

In the self-adhesive composition, the component C serves to control adhesive strength and to control clean adhesive removability.

Due to the addition of the component C in the composition according to an aspect of the present invention, the occurrence of residual adhesive after the removal of the self-adhesive sheet can be reduced.

Preferably, the component C has a peak (melting point; Tm) in the range of 50 to 200°C, preferably 60 to 170°C and more preferably 70 to 160°C in DSC (differential scanning calorimetry) in accordance with JIS K7121.

The component C is preferably a homopolymer of an α-olefin such as ethylene, propylene, 1-butene, 1-hexene, 4-methyl·1-pentene or 1-octene, or
a copolymer of two or more kinds of different α-olefins or an α-olefin-based copolymer of an α-olefin and another polymerizable compound such as vinyl acetate, an α,β-unsaturated carboxylic acid or a derivative thereof.

Specific examples of the components C include:
high-pressure low-density polyethylenes (LDPEs),
ethylene homopolymers produced and marketed as linear low-density polyethylenes (LLDPEs) and high-density polyethylenes (HDPEs),
ethylene-based polymers which are random copolymers of ethylene with one or more other α-olefins such as propylene, 1-butene, 1-pentene, 1-hexene, 4-methyl·1-pentene, 1-octene and 1-decene, and usually have a density in the range of 0.850 to 0.970 g/cm³, and preferably 0.890 to 0.940 g/cm³,
propylene homopolymers produced and marketed as polypropylenes,
random or block copolymers of propylene with one or more other α-olefins such as ethylene, 1-butene, 1-pentene, 1-hexene, 4-methyl·1-pentene, 1-octene and 1-decene,
1-butene homopolymers produced and marketed as polybutenes, or 1-butene-based polymers (1-butene polymers) which are random copolymers of 1-butene with one or more other α-olefins such as ethylene, propylene, 1-pentene, 1-hexene, 4-methyl·1-pentene, 1-octene and 1-decene,
4-methyl·1-pentene homopolymers produced and marketed as 4-methyl·1-pentenes,
4-methyl·1-pentene-based polymers (4-methyl·1-pentene polymers) which are random copolymers of 4-methyl·1-pentene with one or more other α-olefins such as ethylene, propylene, 1-butene, 1-pentene, 1-hexene, 1-octene and 1-decene, and
copolymers of ethylene with another polymerizable compound such as acrylic acid, methacrylic acid, vinylacetic acid, vinyl acetate, methyl acrylate, ethyl acrylate, butyl acrylate, methyl methacrylate or ethyl methacrylate, preferably with a vinyl compound (ethylene·vinyl compound copolymers).

The component C may be a single polymer or two or more kinds of polymers.

Of the polymers described above as examples, a copolymer of ethylene and propylene is preferable as the component C.

Examples of the components C available in the market include Vistamaxx 6102 (trade name, manufactured by ExxonMobil Chemical) (a low-crystalline copolymer of 80 wt% or more propylene with ethylene (density 0.855 to 0.871 g/cm³)).

While the component C is added to the self-adhesive composition according to an aspect of the present invention, in order to further enhance the levels of both the clean adhesive removability and the waterproofness of the self-adhesive sheet,
the total content of the components A, B and C is preferably 50 to 100 wt%, more preferably 55 to 90 wt%, still more preferably 55 to 80 wt%, and furthermore preferably 55 to 70 wt% in the self-adhesive composition excluding the total of the softener and the tackifier;
with respect to 100 wt% of the total of the components A, B and C,
the total of the components A and C is 60 to 80 wt%, more preferably 65 to 80 wt%, still more preferably 70 to 80 wt%, and furthermore preferably 72 to 78 wt%; and
with respect to 100 wt% of the total of the components A and C,
the content of the aforementioned component C is 5 to 50 wt%, more preferably 10 to 48 wt%, still more preferably 20 to 45 wt%, furthermore preferably 30 to 45 wt%, and even more preferably 35 to 45 wt%.

### (Other additives)

When necessary, the self-adhesive composition may further contain at least one additive selected from antioxidants, UV absorbers, UV stabilizers, antistatic agents and lubricants.

Antioxidants are added in order to prevent a change in adhesive strength and a decrease in cohesive power of the self-adhesive composition due to oxidative degradation. The amount is preferably not more than 5 parts by weight, more preferably not more than 2 parts by weight, and still more preferably not more than 1 part by weight per 100 parts by weight of the total of the components A and B in the use of a self-adhesive sheet according to an aspect of the present invention (when the composition comprises the component C as in the composition according to an aspect of the present invention, the total of the components A, B and C).

Examples of the antioxidants include phenolic antioxidants, phosphite antioxidants and thioether antioxidants, with specific examples including ANTAGE W500, W400, W300, BHT, SP, DBH, DHA and Crystal (trade names) manufactured by Kawaguchi Chemical Industry Co., Ltd., and SUMILIZER TPL and TTP (trade names) manufactured by Sumitomo Chemical Co., Ltd.

UV absorbers are added to absorb UV rays and thereby to prevent the self-adhesive composition from photooxidative degradation. The amount is preferably not more than 5 parts by weight, more preferably not more than 2 parts by weight, and still more preferably not more than 1 part by weight per 100 parts by weight of the total of the components A and B in the use of a self-adhesive sheet according to an aspect of the present invention (when the composition comprises the component C as in the composition according to an aspect of the present invention, the total of the components A, B and C).

Examples of the UV absorbers include benzotriazole UV absorbers, benzophenone UV absorbers and inorganic UV absorbers such as fine particulate cerium oxide, with specific examples including TINUVIN 326 and TINUVIN P (trade names) manufactured by BASF JAPAN.

UV stabilizers are added from the viewpoint of the weather resistance of the self-adhesive composition. The amount is preferably not more than 5 parts by weight, more preferably not more than 2 parts by weight, and still more preferably not more than 1 part by weight per 100 parts by weight of the total of the components A and B in the use of a self-adhesive sheet according to an aspect of the present invention (when the composition comprises the component C as in the composition according to an aspect of the present invention, the total of the components A, B and C).

Examples of the UV stabilizers include hindered amine light stabilizers (HALSs) and benzoate light stabilizers.

Inorganic fillers and/or organic fillers are added to control the viscosity and the adhesive strength of the self-adhesive composition. The amount is preferably not more than 5 parts by weight, more preferably not more than 2 parts by weight, and still more preferably not more than 1 part by weight per 100 parts by weight of the total of the components A and B in the use of a self-adhesive sheet according to an aspect of the present invention (when the composition comprises the component C as in the composition according to an aspect of the present invention, the total of the components A, B and C).

Examples of the inorganic fillers include talc and calcium carbonate. Examples of the organic fillers include polyethylene fine particles.

Antistatic agents are added to prevent the buildup of static electricity in the self-adhesive composition. The amount is preferably not more than 5 parts by weight, more preferably not more than 2 parts by weight, and still more preferably not more than 1 part by weight per 100 parts by weight of the total of the components A and B in the use of a self-adhesive sheet according to an aspect of the present invention (when the composition comprises the component C as in the composition according to an aspect of the present invention, the total of the components A, B and C).

Examples of the antistatic agents include surfactants, conductive resins and conductive fillers.

Lubricants are added to improve the slip properties of plastics during the shaping and working of the self-adhesive composition as well as the slip properties of the surface of products after the shaping and working. The amount is preferably not more than 5 parts by weight, more preferably not more than 2 parts by weight, and still more preferably not more than 1 part by weight per 100 parts by weight of the total of the components A and B in the use of a self-adhesive sheet according to an aspect of the present invention (when the composition comprises the component C as in the composition according to an aspect of the present invention, the total of the components A, B and C).

Examples of the lubricants include stearic acid amide and calcium stearate.

### [Self-adhesive sheets]

A self-adhesive sheet of the invention has the inventive self-adhesive composition on at least one side of a sheet substrate.

As the sheet substrates, films, nonwoven fabrics, woven fabrics, papers or the like may be used. Metals may be vapor-deposited thereon as required. From the viewpoints of application workability, durability and cost, films or films on which metal is vapor-deposited as required are preferable.

As materials of the sheet substrates, thermoplastic resins, cellulose polymers, metals, glasses or the like may be used. From the viewpoints of easy production and workability of the self-adhesive sheets, thermoplastic resins are preferable.

Examples of the thermoplastic resins include polyolefin resins such as polyethylene, polypropylene, ethylene/α-olefin copolymer and ethylene/vinyl acetate copolymer, nylon resins and polyester resins. From the viewpoints of easy production and workability of the self-adhesive sheets, polyolefin resins and/or polyester resins are preferable, and polyolefin resins are more preferable.

The materials may be used singly or in combination as a mixture or a laminated body. The sheet substrate may be a single-layer or multilayer substrate.

Designs such as characters, information, patterns, graphics and pictures, or monochromatic colors may be printed on one side of the sheet substrate, preferably on the side of the sheet substrate opposite to the self-adhesive agent. Further, continuous uneven or irregular patterns may be formed to eliminate bubbles that are easily trapped during application.

Where necessary, the sheet substrate may comprise titanium oxide or carbon black for the purpose of blocking UV rays, and may comprise at least one selected from antioxidants, UV absorbers, UV stabilizers, antistatic agents and lubricants.

From the viewpoints of adhesive strength and cost, the thickness of the self-adhesive agent is preferably 4 to 20 µm, and more preferably 5 to 15 µm.

### [Use applications of self-adhesive sheets]

According to an aspect, the present invention relates to the use of a self-adhesive sheet for the protection of coatings which may be suitably used in coating protection applications to protect coatings on articles that are used under severe high temperature conditions such as, for example, being exposed to the outdoor in the hot sun.
In the use of a self-adhesive sheet for the protection of coatings according to an aspect of the present invention, the adhesive sheet comprises a self-adhesive composition comprising:
a styrene elastomer (component A), and
an amorphous polypropylene elastomer (component B),
on at least one side of a sheet substrate,
wherein the component A is a hydrogenated product of a block copolymer formed by copolymerization of:
   a polymer block I of units derived from styrene, wherein the unit of the polymer is represented by Formula (1) below: 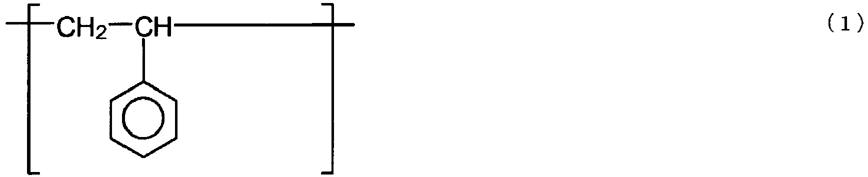
   a polymer block II formed by 1,2-vinyl polymerization of isoprene (diene compound 1), wherein the unit of the polymer is represented by Formula (2) below: 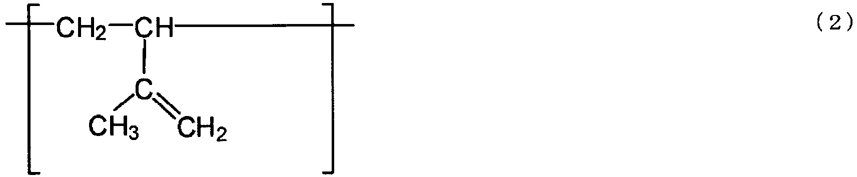
   a polymer block III having double bonds in the polymer main chain, formed by 1,4-addition polymerization of isoprene (diene compound 1), wherein the unit of the polymer is represented by Formula (3) below: 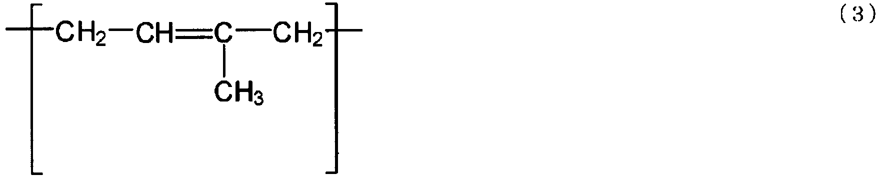
   a polymer block IV formed by 1,2-vinyl polymerization of 1,3-butadiene (diene compound 2), wherein the unit of the polymer is represented by Formula (4) below: 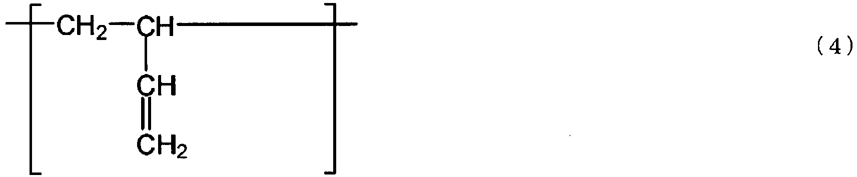
   and a polymer block V having double bonds in the polymer main chain, formed by 1,4-addition polymerization of 1,3-butadiene (diene compound 2), wherein the unit of the polymer is represented by Formula (5) below: 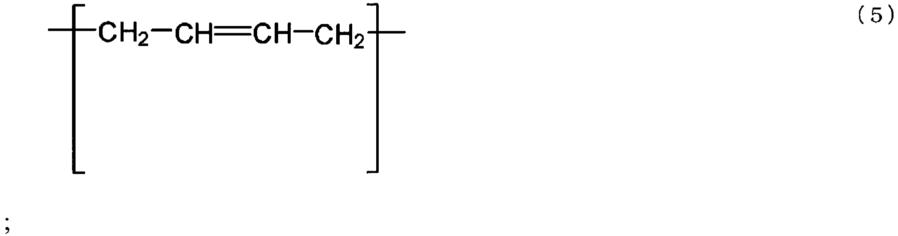
   the polymer block I comprises 90 mol% or more of the styrene compound-derived units,
   the polymer block II comprises 90 mol% or more of units derived from the diene compound 1,
   the polymer block III comprises 90 mol% or more of units derived from the diene compound 1,
   the polymer block IV comprises 90 mol% or more of units derived from the diene compound 2, and
   the polymer block V comprises 90 mol% or more of units derived from the diene compound 2;
   the component B is a polymer formed by polymerization of at least propylene, and is a polypropylene elastomer (excluding the component A) which does not show a peak having a heat of crystal melting of 1 J/g or more as measured by DSC (differential scanning calorimetry, heating rate 5°C/min) in the range of 20 to 250°C in accordance with JIS K7122,
   the self-adhesive composition has a [tanδ]ₚₘₐₓ of 0.6 to 3.0 as measured by Standard Test 1 described below, and
   when the [tanδ]ₚₘₐₓ is 0.6 or more and less than 1.1, the content of the component A is 60 to 80 wt% relative to the total of the components A and B taken as 100 wt%, and
   when the [tanδ]ₚₘₐₓ is 1.1 to 3.0, the content of the component A is 50 to 80 wt% relative to the above total,

### [Standard Test 1]

(1) the self-adhesive composition is formed into a 1 mm thick sheet with a press machine at 160°C and a pressure of 40 kgf/cm², and the sheet is cut to give a test sheet for the measurement of [tanδ]ₚₘₐₓ;
(2) the test sheet is tested on a viscoelastometer at a measurement frequency of 1 Hz, a swing angle γ of 0.05%, measurement temperatures of -30°C to 100°C and a heating rate of 5°C/min to record a tanδ vs. temperature curve, and a maximum value of a tanδ peak or peaks recorded at -30°C to 100°C is obtained as the [tanδ]ₚₘₐₓ of the self-adhesive composition.

Preferred examples of such coatings on articles include automobile coatings, building exterior coatings and exterior materials.

In particular, automobile coatings, for example, top coatings on the surface of coat-finished car bodies are frequently exposed to severe high temperature conditions, not only in Japan but recently outdoors in the scorching sun in countries near the equator. Thus, suitable use is made of the self-adhesive sheets of the invention with which the occurrence of residual adhesive is suppressed even when the sheets are exposed to a high temperature of 90°C.

In the applications described above,
the UV transmittance at 190 to 400 nm of the sheet substrate used in the invention is preferably not more than 1%, more preferably not more than 0.5%, and particularly preferably not more than 0.3% as measured with a spectrophotometer (V-570 manufactured by JASCO Corporation) from the viewpoint of the degradation of the self-adhesive agent.

To suppress the occurrence of residual adhesive at high temperatures, the thickness of the self-adhesive agent is preferably 4 to 20 µm, and more preferably 5 to 15 µm.

### [Methods for producing self-adhesive sheets]

The self-adhesive sheet may be produced by coating at least one side of the sheet substrate with the self-adhesive composition by any of various known methods. Preferably, the self-adhesive sheet is fabricated by the extrusion coating (hot melt coating) of the self-adhesive composition. In the case where the self-adhesive composition is soluble in solvents, a spread coating method may be adopted.

Examples of the extrusion coating methods include a method for coextrusion of the single-layer or multilayer sheet substrate and the self-adhesive composition, or a method for melt extrusion coating of the self-adhesive composition onto the sheet substrate.

In the method for coextrusion, for example, the self-adhesive sheet of the invention may be produced by kneading beforehand the self-adhesive composition of the invention in an extruder equipped with a multilayer die such as a feedblock die or a multimanifold die, and then coextruding the kneadate with the sheet substrate to form a film.

During this process, the temperature of the extruder for the sheet substrate is set at 100 to 280°C, and preferably 150 to 240°C, and
the temperature of the extruder for the self-adhesive composition is set at 100 to 250°C, and preferably 150 to 240°C.

The temperature of the die is set at 100 to 280°C, and preferably 150 to 240°C. The take-off speed is 0.1 to 300 m/min, and preferably 5 to 100 m/min.

In the melt extrusion coating, for example, the self-adhesive sheet of the invention may be produced by melt-extruding with a T-die extruder the previously-kneaded self-adhesive composition onto at least one side of the sheet substrate that has been subjected to a corona treatment, a release treatment (a long-chain alkyl releasing agent, a silicon releasing agent or the like) or a primer treatment to form a film.

The temperature of the die is set at 100 to 280°C, and preferably 150 to 240°C. The take-off speed is 0.1 to 300 m/min, and preferably 5 to 100 m/min.

When the melt extrusion coating is adopted, the sheet substrate may be a thermoplastic film or a non-thermoplastic substrate such as paper, metal, woven fabric or nonwoven fabric.

The kneading of the self-adhesive composition may be performed with a kneading machine such as a single-screw extruder, a twin-screw extruder, a kneader or a Banbury mixer.

For example, the spread coating method may be performed, although not limited to, in such a manner that the self-adhesive agent of the invention is dissolved in a solvent such as toluene or hexane with a concentration of 5 to 45%, preferably 10 to 30%, and the solution is applied by a known coating method and then dried, thereby producing the self-adhesive sheet of the invention.

From the viewpoint of productivity, the melt flow rate (MFR) of the self-adhesive composition is preferably not more than 60 g/10 min, more preferably not more than 50 g/10 min, still more preferably not more than 45 g/10 min, and further preferably not more than 30 g/10 min.

In the case where the sheet substrate is composed of a thermoplastic resin composition, it is preferable from the viewpoint of productivity that the MFRs of the resin forming the sheet substrate and the self-adhesive composition be:
[MFR of the resin forming the sheet substrate] ≤ [MFR of the self-adhesive composition],
more preferably, [MFR of the self-adhesive composition] - [MFR of the resin forming the sheet substrate] ≤ 50 g/10 min,
still more preferably, [MFR of the self-adhesive composition] - [MFR of the resin forming the sheet substrate] ≤ 20 g/10 min, and
further preferably, [MFR of the self-adhesive composition] - [MFR of the resin forming the sheet substrate] ≤ 10 g/10 min.

The MFR of the self-adhesive composition may be controlled by increasing or decreasing the MFR(s) of the component(s) A, B and/or C, or the amounts of the tackifier and the softener.

The MFR of the resin forming the sheet substrate may be controlled by the MFR of the base polymer.

### EXAMPLES

Self-adhesive sheets of Examples 1 to 5 and Comparative Examples 1 to 5 were evaluated by the measurement methods under the measurement conditions described below.

### [Measurement methods and measurement conditions]

### (1) Glass transition point (Tg) and viscoelasticity ([tanδ]ₚₘₐₓ)

The self-adhesive composition was formed into a 1 mm thick sheet with 10-Ton Desktop Test Press Machine (Gonno Yuatsuki Seisakusho K.K.) at 160°C and a pressure of 40 kgf/cm², and the sheet was cut to give a test sheet for the measurement of [tanδ]ₚₘₐₓ and Tg.

The test sheet was tested on a viscoelastometer (product name Physica MCR301, manufactured by Anton Paar) at a measurement frequency of 1 Hz, a swing angle γ of 0.05%, measurement temperatures of -30°C to 100°C and a heating rate of 5°C/min to determine the tanδ and the Tg (glass transition point). With respect to the tanδ vs. temperature curve recorded at -30°C to 100°C, a maximum value of the tanδ peak(s) was obtained as the [tanδ]ₚₘₐₓ of the self-adhesive composition.

The test sheets of Examples 1 to 4 each had a single tanδ peak at -30°C to 100°C, and the maximum value was its peak top value.

### (2) Specific adhesive strength

The adhesive strength was determined by measuring the 180° peel strength by a method in accordance with JIS Z0237 2000. A 25 mm wide self-adhesive sheet was applied to a BASUS plate and was compression bonded thereto by moving thereon a 1 kg compression roller back and forth one time. After 5 minutes, the 180° peel strength was determined at a tensile speed of 0.3 m/min.

### (3) Clean adhesive removability

The surface of a plate coated with an automobile clear coating manufactured by NIPPON PAINT CO., LTD. was lightly polished with a coating polishing compound (FINESSE-IT PASTE GLAZE manufactured by 3M) and was wiped to remove the compound. Thereafter, the self-adhesive sheet was applied to the coated plate such that several wrinkles were formed. After the lapse of 12 hours at 90°C, the self-adhesive sheet was peeled slowly at an angle of 45° in a 60°C atmosphere. The surface was visually inspected for the presence or absence of any residual adhesive.

### (4) Mark step (waterproofness)

The self-adhesive sheet was applied to a coated plate described below in such a manner that a wrinkle was formed. The plate was then allowed to stand in distilled water at 40°C for 24 hours. After collection, the self-adhesive sheet was released and then the plate was allowed to stand at normal temperature for 24 hours. The size of the mark step that had occurred in the coated plate in contact with the wrinkle of the self-adhesive sheet was measured with SURFCORDER ET4000A manufactured by Kosaka Laboratory Ltd. The height from the trough to the crest of the mark left under the wrinkle was measured as the size of the mark step.
SURFCORDER ET4000A was set as follows.
Measurement stylus: 2 µm R
Measurement load: 100 µN
Measurement speed: 0.02 mm/s
Measurement distance: 0.4 mm
Cut off: 0.25 mm
Leveling: 2 points in the vicinity
The following coatings were used.
Coating D: automobile clear coating (manufactured by DAI NIPPON TORYO CO., LTD.)
Coating S: automobile clear coating (manufactured by BASF)

The above coatings were each formed in the following manner. An electrodeposited plate manufactured by PALTEC TEST PANELS CO., LTD. which had a steel plate thickness of 0.7 mm was coated with a black paint and was allowed to stand at normal temperature for 5 minutes; further, a clear paint manufactured by DAI NIPPON TORYO CO., LTD. or BASF was applied thereon and was baked at 140°C for 20 minutes, thus forming an approximately 15 µm thick black coating and an approximately 30 µm thick clear coating.

After the measurement of the mark step, the surface was visually observed under a fluorescent lamp and was evaluated:
as good when the mark was nearly invisible at any angles of the coating;
as substantially good when the mark was nearly invisible as seen from the front but was visible depending on the angle; and
as dull when fine unevenness was seen on the surface, the surface gloss was apparently lost, or the reflection of light on the surface was apparently different from an area to which the sheet was applied depending on the angle.

### (5) Melt flow rate (MFR)

The melt flow rate was measured by a method in accordance with JIS K 7210.

The melt flow rate was measured at a measurement temperature of 230°C under a load of 2.16 kg with use of melt index tester KAYENESS 7053 manufactured by YASUDA SEIKI SEISAKUSHO, LTD.

### (6) Film forming properties

Film uniformity such as color unevenness and melt fracture was visually evaluated.

### [Thermoplastic resins]

In the following, a polymer block may be referred to by using the name of a compound from which the units are derived, specifically, may be referred to as a "name-of-compound polymer block". For example, a polymer block of units derived from styrene will be otherwise referred to as a styrene polymer block.

### (1) HYBRAR 7311 (manufactured by KURARAY CO., LTD.):

Hydrogenated product of a block copolymer having a styrene polymer block-isoprene polymer block-vinyl isoprene polymer block-1,3-butadiene polymer block-vinyl 1,3-butadiene polymer block structure.

### (2) Vistamaxx 6102 (manufactured by ExxonMobil Chemical):

Low-crystalline copolymer of at least 80 wt% propylene with ethylene (density 0.855 to 0.871 g/cm³).

### (3) TAFTHREN X1102 (manufactured by Sumitomo Chemical Co., Ltd.):

Amorphous polyolefin.

### (4) SEPTON 2063 (manufactured by KURARAY CO., LTD.):

SEPS resin (hydrogenated product of a polymer having a styrene polymer block and a styrene/isoprene random polymer block).

### (5) DYNARON 1320 (manufactured by JSR CORPORATION):

HSBR resin (hydrogenated product of styrene·butadiene random copolymer).

### (6) TUFTEC H1221 (manufactured by Asahi Kasei Chemicals Corporation):

SEBS resin (hydrogenated product of a polymer having a styrene polymer block and a styrene/butadiene random polymer block).

[Example 1] is an example of a composition that may be employed in the use according to an aspect of the present invention.

| | |
|---|---|
| Component A: HYBRAR 7311 | 46.9 parts by weight |
| Component B: TAFTHREN X1102 | 15.6 parts by weight |
| Sheet substrate: white polypropylene substrate layer (50 µm in thickness) | |

First, 3 kg of a self-adhesive composition having the above chemical composition was kneaded with a twin-screw extruder (product name TEM-35BH manufactured by TOSHIBA MACHINE CO., LTD.) at 180°C and 200 rpm. The kneaded materials were melt-coextruded with the sheet substrate with use of a T-die extruder having 30 mm orifices at a T-die temperature of 230°C and a film take-off speed of 5 m/min to be formed as a self-adhesive layer (8 µm in thickness). A self-adhesive sheet was thus fabricated.

[Example 2] is an example of a composition that may be employed in the use according to an aspect of the present invention.

| | |
|---|---|
| Component A: HYBRAR 7311 | 46.9 parts by weight |
| Component B: TAFTHREN X1102 | 15.6 parts by weight |
| Softener: Polybutene HV300 (manufactured by JX Nippon Oil & Energy Corporation) | 20.8 parts by weight |
| Tackifier: CLEARON K100 (manufactured by YASUHARA CHEMICAL CO., LTD.) | 15.6 parts by weight |
| Antioxidant: ANTAGE W500 (manufactured by Kawaguchi Chemical Industry Co., Ltd.) | 0.5 parts by weight |
| Sheet substrate: white polypropylene substrate layer (50 µm in thickness) | |

First, 3 kg of a self-adhesive composition having the above chemical composition was kneaded with a twin-screw extruder (product name TEM-35BH manufactured by TOSHIBA MACHINE CO., LTD.) at 180°C and 200 rpm. The kneaded materials were melt-coextruded with the sheet substrate with use of a T-die extruder having 30 mm orifices at a T-die temperature of 230°C and a film take-off speed of 5 m/min to be formed as a self-adhesive layer (8 µm in thickness). A self-adhesive sheet was thus fabricated.

### [Example 3]

| | |
|---|---|
| Component A: HYBRAR 7311 | 26.0 parts by weight |
| Component C: Vistamaxx 6102 | 20.8 parts by weight |
| Component B: TAFTHREN X1102 | 15.6 parts by weight |
| Softener: Polybutene HV300 (manufactured by JX Nippon Oil & Energy Corporation) | 20.8 parts by weight |
| Tackifier: CLEARON K100 (manufactured by YASUHARA CHEMICAL CO., LTD.) | 15.6 parts by weight |
| Antioxidant: ANTAGE W500 (manufactured by Kawaguchi Chemical Industry Co., Ltd.) | 0.5 parts by weight |
| Sheet substrate: white polypropylene substrate layer (50 µm in thickness) | |

A self-adhesive sheet was fabricated in the similar manner to in Example 3, except that the above chemical composition contained the component C.

### [Example 4]

| | |
|---|---|
| Component A: HYBRAR 7311 (manufactured by KURARAY CO., LTD.) | 24.8 parts by weight |
| Component C: Vistamaxx 6102 | 18.9 parts by weight |
| Component B: TAFTHREN X1102 | 14.9 parts by weight |
| Softener: Polybutene HV300 (manufactured by JX Nippon Oil & Energy Corporation) | 24.8 parts by weight |
| Tackifier: CLEARON K100 (manufactured by YASUHARA CHEMICAL CO., LTD.) | 14.9 parts by weight |
| Antioxidant: ANTAGE W500 (manufactured by Kawaguchi Chemical Industry Co., Ltd.) | 0.5 parts by weight |
| Sheet substrate: white polypropylene substrate layer (50 µm in thickness) | |

A self-adhesive sheet was fabricated in the similar manner to in Example 3, except that the above chemical composition contained the component C.

### [Comparative Example 1]

| | |
|---|---|
| SEPS resin: SEPTON 2063 | 46.9 parts by weight |
| Component B: TAFTHREN X1102 | 15.6 parts by weight |
| Sheet substrate: white polypropylene substrate layer (50 µm in thickness) | |

First, 3 kg of a self-adhesive composition having the above chemical composition was kneaded with a twin-screw extruder (product name TEM-35BH manufactured by TOSHIBA MACHINE CO., LTD.) at 180°C and 200 rpm. The kneaded materials were melt-coextruded with the sheet substrate with use of a T-die extruder having 30 mm orifices at a T-die temperature of 230°C and a film take-off speed of 5 m/min to be formed as a self-adhesive layer (8 µm in thickness). A self-adhesive sheet was thus fabricated.

### [Comparative Example 2]

| | |
|---|---|
| SEPS resin: SEPTON 2063 | 46.9 parts by weight |
| TAFTHREN X1102 | 15.6 parts by weight |
| Softener: Polybutene HV300 (manufactured by JX Nippon Oil & Energy Corporation) | 20.8 parts by weight |
| Tackifier: CLEARON K100 (manufactured by YASUHARA CHEMICAL CO., LTD.) | 15.6 parts by weight |
| Antioxidant: ANTAGE W500 (manufactured by Kawaguchi Chemical Industry Co., Ltd.) | 0.5 parts by weight |
| Sheet substrate: white polypropylene substrate layer (50 µm in thickness) | |

A surface self-adhesive sheet was fabricated in the similar manner to in Example 1, except that the component A was not added and instead the SEPS resin (a hydrogenated product of a polymer having a styrene polymer block and a styrene/isoprene random polymer block) was added.

### [Comparative Example 3]

| | |
|---|---|
| TAFTHREN X1102 | 23.6 parts by weight |
| DYNARON 1320 (manufactured by JSR CORPORATION) | 35.4 parts by weight |
| Softener: Polybutene HV300 (manufactured by JX Nippon Oil & Energy Corporation) | 15.0 parts by weight |
| Tackifier: CLEARON K100 (manufactured by YASUHARA CHEMICAL CO., LTD.) | 20.0 parts by weight |
| Antioxidant: ANTAGE W500 (manufactured by Kawaguchi Chemical Industry Co., Ltd.) | 0.5 parts by weight |
| Sheet substrate: white polypropylene substrate layer (50 µm in thickness) | |

A surface self-adhesive sheet was fabricated in the similar manner to in Example 1, except that the above chemical composition contained DYNARON 1320 (the HSBR resin (a hydrogenated product of styrene·butadiene random copolymer)) instead of the component A.

### [Comparative Example 4]

| | |
|---|---|
| TAFTHREN X1102 | 12.3 parts by weight |
| TUFTEC H1221 | 61.7 parts by weight |
| Softener: Polybutene HV300 (manufactured by JX Nippon Oil & Energy Corporation) | 6.2 parts by weight |
| Tackifier: CLEARON K100 (manufactured by YASUHARA CHEMICAL CO., LTD.) | 18.5 parts by weight |
| Antioxidant: ANTAGE W500 (manufactured by Kawaguchi Chemical Industry Co., Ltd.) | 0.5 parts by weight |
| Sheet substrate: white polypropylene substrate layer (50 µm in thickness) | |

A surface self-adhesive sheet was fabricated in the similar manner to in Example 1, except that the above chemical composition contained TUFTEC H1221 (the SEBS resin (a hydrogenated product of a polymer having a styrene polymer block and a styrene/butadiene random polymer block)) instead of the component A.

### [Comparative Example 5]

| | |
|---|---|
| TAFTHREN X1102 | 23.6 parts by weight |
| TUFTEC H1221 (manufactured by Asahi Kasei Chemicals Corporation) | 35.4 parts by weight |
| Softener: Polybutene HV300 (manufactured by JX Nippon Oil & Energy Corporation) | 15.0 parts by weight |
| Tackifier: CLEARON K100 (manufactured by YASUHARA CHEMICAL CO., LTD.) | 20.0 parts by weight |
| Antioxidant: ANTAGE W500 (manufactured by Kawaguchi Chemical Industry Co., Ltd.) | 0.5 parts by weight |
| Sheet substrate: white polypropylene substrate layer (50 µm in thickness) | |

A surface self-adhesive sheet was fabricated in the similar manner to in Example 1, except that the above chemical composition contained TUFTEC H1221 (the SEBS resin (a hydrogenated product of a polymer having a styrene polymer block and a styrene/butadiene random polymer block)) instead of the component A.

**[Table 1]**

| | | Ex. 1 | Ex. 2 | Ex. 3 | Ex. 4 | Comp. Ex. 1 | Comp. Ex. 2 | Comp. Ex. 3 | Comp. Ex. 4 | Comp. Ex. 5 |
|---|---|---|---|---|---|---|---|---|---|---|
| Component A (pbw) | HYBRAR 7311 | 46.9 | 46.9 | 26.0 | 24.8 | | | | | |
| Component A1 (pbw) | DYNARON 1320 | | | | | | | 35.4 | | |
| Component A2 (pbw) | SEPTON 2063 | | | | | 46.9 | 46.9 | | | |
| Component A3 (pbw) | TUFTEC H1221 | | | | | | | | 61.7 | 35.4 |
| Component B (pbw) | TAFTHREN X1102 | 15.6 | 15.6 | 15.6 | 14.9 | 15.6 | 15.6 | 23.6 | 12.3 | 23.6 |
| Component C (pbw) | Vistamaxx 6102 | | | 20.8 | 18.9 | | | | | |
| A/(A+B) | wt% | 75.0 | 75.0 | 62.5 | 62.5 | 75.0 | 75.0 | 60.0 | 83.4 | 60.0 |
| (A+C)/(A+B+C) | wt% | 75.0 | 75.0 | 75.0 | 74.6 | 75.0 | 75.0 | 60.0 | 83.4 | 60.0 |
| A+B+C | pbw | 62.5 | 62.5 | 62.4 | 58.6 | 62.5 | 62.5 | 59.0 | 74.0 | 59.0 |
| (A+B)/(A+B+C) | wt% | 100 | 100 | 67 | 68 | 100 | 100 | 100 | 100 | 100 |
| C/(A+C) | wt% | 0 | 0 | 44.4 | 43.2 | 0 | 0 | 0 | 0 | 0 |
| Softener HV300 | pbw | 0 | 20.8 | 20.8 | 24.8 | 0 | 20.8 | 15.0 | 6.2 | 15.0 |
| | wt% to (A+B+C) | 0 | 33.3 | 33.3 | 42.3 | 0 | 33.3 | 25.4 | 8.4 | 25.4 |
| Tackifier CLEARON K100 | pbw | 0 | 15.6 | 15.6 | 14.9 | 0 | 15.6 | 20 | 18.5 | 20 |
| | wt% to (A+B+C) | 0 | 25.0 | 25.0 | 25.4 | 0 | 25.0 | 33.9 | 25.0 | 33.9 |
| Antioxidant W500 | pbw | 0 | 0.5 | 0.5 | 0.5 | 0 | 0.5 | 0.5 | 0.5 | 0.5 |
| T (total parts bv weight (pbw)) | | 62.5 | 99.4 | 99.3 | 98.8 | 62.5 | 99.4 | 94.5 | 99.2 | 94.5 |
| (A+B+C)/T | wt% | 100 | 62.9 | 62.8 | 59.3 | 100 | 62.9 | 62.4 | 74.6 | 62.4 |
| [tanδ]ₚₘₐₓ | | 0.82 | 1.68 | 1.69 | 1.33 | 0.42 | 0.45 | 1.31 | 1.37 | 1.62 |
| Glass transition point Tg(°C) | | -7.7 | -15.8 | -14.8 | -16.9 | -7.2 | -6.7 | -12.8 | -26.2 | -13.8 |
| Specific adhesive strength (N/25 mm) | With respect to BASUS plate | 2.25 | 4.85 | 4.89 | 5.24 | 2.57 | 6.05 | 5.54 | 4.81 | 7.14 |
| Clean adhesive removability | | ⊚ | ⊚○ | ⊚ | ⊚ | ⊚○ | Δ × | Δ× | ⊚ | ⊚ |
| Mark (waterproofness step) | Coating D | 0.25 | 0.13 | 0.16 | 0.17 | 0.48 | 0.11 | 0.33 | 0.71 | 0.42 |
| | Coating S | 0.47 | 0.29 | 0.27 | 0.28 | 0.49 | 0.23 | 0.88 | 0.59 | 0.27 |
| | Surface of tested coating | Good | Good | Good | Good | Good | Substantially good | Good | Dull | Dull |
| MFR (g/10mm) at 230°C | Substrate | 2 | 2 | 2 | 2 | 2 | 2 | 2 | 2 | 2 |
| | Self-adhesive agent | 1 | 17 | 14 | 17 | 2 | 39 | 15 | 21 | 41 |
| Film forming properties | | OK | OK | OK | OK | OK | OK | OK | OK | OK |
| Total evaluation | | ○ | ○ | ○ | ○ | × | × | × | × | × |

The self-adhesive sheets of Examples 1, 2, 3 and 4 achieved very small degrees of both residual adhesive and waterproofness steps, and were shown to have high levels of both clean adhesive removability and waterproofness. Deep waterproofness steps were caused in Comparative Example 1. Comparative Examples 2 and 3 resulted in large amounts of residual adhesive. In Comparative Examples 4 and 5, the waterproofness steps were deep and the tested coatings had a dull surface.

## Claims

1. A self-adhesive composition comprising:
a styrene elastomer (component A),
an amorphous polypropylene elastomer (component B), and
a crystalline polyolefin (component C),
wherein the component A is a hydrogenated product of a block copolymer formed by copolymerization of:
a polymer block I of units derived from styrene, wherein the unit of the polymer is represented by Formula (1) below: 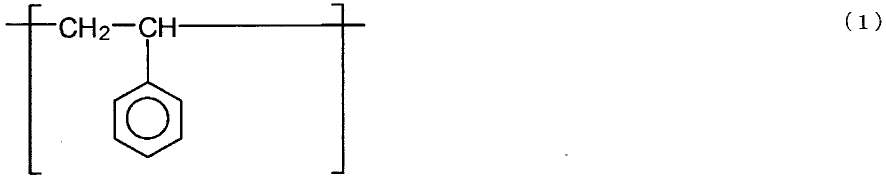
a polymer block II formed by 1,2-vinyl polymerization of isoprene (diene compound 1), wherein the unit of the polymer is represented by Formula (2) below: 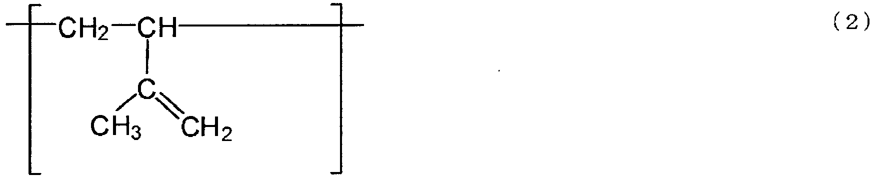
a polymer block III having double bonds in the polymer main chain, formed by 1,4-addition polymerization of isoprene (diene compound 1), wherein the unit of the polymer is represented by Formula (3) below: 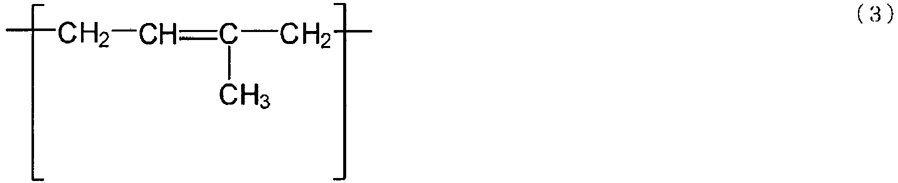
a polymer block IV formed by 1,2-vinyl polymerization of 1,3-butadiene (diene compound 2), wherein the unit of the polymer is represented by Formula (4) below: 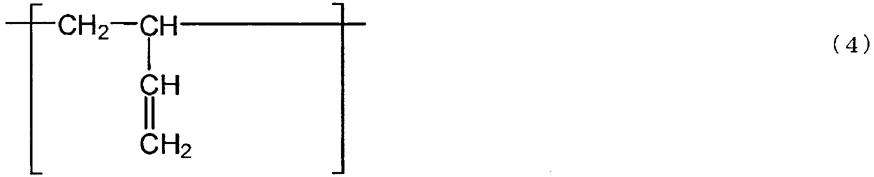
and a polymer block V having double bonds in the polymer main chain, formed by 1,4-addition polymerization of 1,3-butadiene (diene compound 2), wherein the unit of the polymer is represented by Formula (5) below: 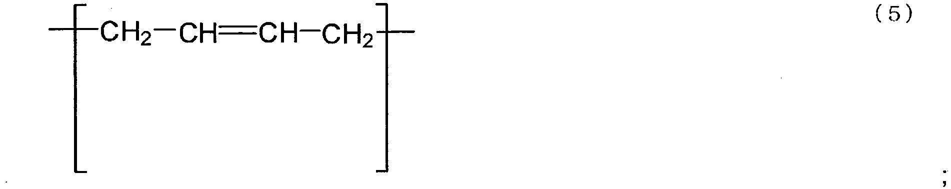
the polymer block I comprises 90 mol% or more of the styrene compound-derived units,
the polymer block II comprises 90 mol% or more of units derived from the diene compound 1,
the polymer block III comprises 90 mol% or more of units derived from the diene compound 1,
the polymer block IV comprises 90 mol% or more of units derived from the diene compound 2, and
the polymer block V comprises 90 mol% or more of units derived from the diene compound 2;
the component B is a polymer formed by polymerization of at least propylene, and is a polypropylene elastomer (excluding the component A) which does not show a peak having a heat of crystal melting of 1 J/g or more as measured by DSC (differential scanning calorimetry, heating rate 5°C/min) in the range of 20 to 250°C in accordance with JIS K7122,
the self-adhesive composition has a [tanδ]ₚₘₐₓ of 1.1 to 3.0 as measured by Standard Test 1 described below,
the content of the component A is 50 to 80 wt% relative to the total of the components A and B taken as 100 wt%,
the total of the components A and C is 60 to 80 wt% with respect to 100 wt% of the total of the components A, B and C, and
the content of the component C is 5 to 50 wt% with respect to 100 wt% of the total of the components A and C,
[Standard Test 1]
(1) the self-adhesive composition is formed into a 1 mm thick sheet with a press machine at 160°C and a pressure of 40 kgf/cm², and the sheet is cut to give a test sheet for the measurement of (tanδ]ₚₘₐₓ;
(2) the test sheet is tested on a viscoelastometer at a measurement frequency of 1 Hz, a swing angle γ of 0.05%, measurement temperatures of -30°C to 100°C and a heating rate of 5°C/min to record a tanδ vs. temperature curve, and a maximum value of a tanδ peak or peaks recorded at -30°C to 100°C is obtained as the [tanδ]ₚₘₐₓ of the self-adhesive composition.

2. The self-adhesive composition according to claim 1, wherein
the self-adhesive composition further comprises a softener and/or a tackifier resin,
the softener is at least one selected from the group consisting of oils, paraffin waxes, low-molecular weight polybutenes, low-molecular weight polyisoprenes, low-molecular weight polyisobutylenes and low-molecular weight polyolefins, and
the tackifier resin is at least one selected from the group consisting of rosin resins, terpene resins, coumarone·indene resins, styrene resins, aliphatic, alicyclic or aromatic petroleum resins, and hydrogenated products of these resins.

3. The self-adhesive composition according to claim 1 or 2, further comprising at least one agent selected from the group consisting of antioxidants, UV absorbers, UV stabilizers, antistatic agents and lubricants.

4. A self-adhesive sheet comprising the self-adhesive composition described in any one of claims 1 to 3 on at least one side of a sheet substrate.

5. The self-adhesive sheet according to claim 4, which is a self-adhesive sheet for the protection of coatings.

6. The self-adhesive sheet according to claim 5, which is a self-adhesive sheet for the protection of automobile coatings.

7. A method for producing the self-adhesive sheet described in claim 5 or 6, comprising coextruding the self-adhesive composition and the sheet substrate in a side-by-side manner to form a stack, wherein
the sheet substrate comprises a thermoplastic resin composition,
the self-adhesive composition has a MFR at 230°C of not more than 60 g/10 min,
the difference between the MFR at 230°C of the self-adhesive composition and the MFR at 230°C of the thermoplastic resin composition is not more than 50 g/10 min.

8. The method for producing the self-adhesive sheet according to claim 7, wherein the difference between the MFRs is not more than 30 g/10 min.

9. Use of a self-adhesive sheet for the protection of coatings comprising a self-adhesive composition comprising:
a styrene elastomer (component A), and
an amorphous polypropylene elastomer (component B),
on at least one side of a sheet substrate,
wherein the component A is a hydrogenated product of a block copolymer formed by copolymerization of:
a polymer block I of units derived from styrene, wherein the unit of the polymer is represented by Formula (1) below: 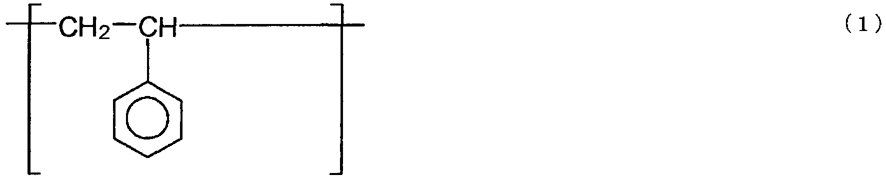
a polymer block II formed by 1,2-vinyl polymerization of isoprene (diene compound 1), wherein the unit of the polymer is represented by Formula (2) below: 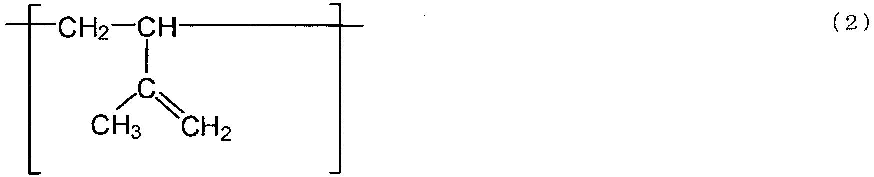
a polymer block III having double bonds in the polymer main chain, formed by 1,4-addition polymerization of isoprene (diene compound 1), wherein the unit of the polymer is represented by Formula (3) below: 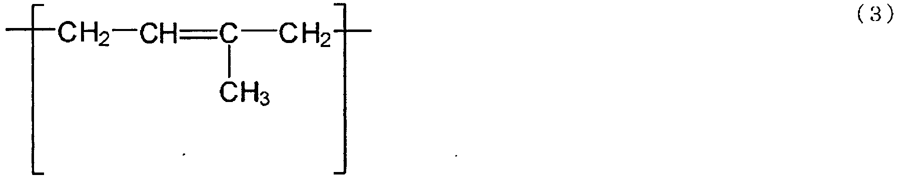
a polymer block IV formed by 1,2-vinyl polymerization of 1,3-butadiene (diene compound 2), wherein the unit of the polymer is represented by Formula (4) below: 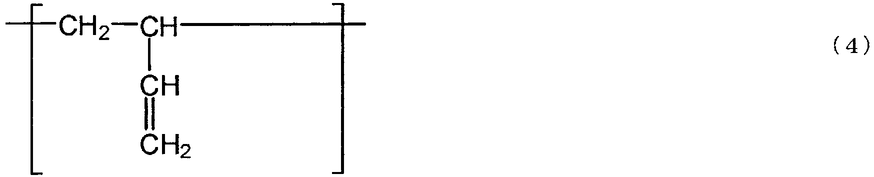
and a polymer block V having double bonds in the polymer main chain, formed by 1,4-addition polymerization of 1,3-butadiene (diene compound 2), wherein the unit of the polymer is represented by Formula (5) below: 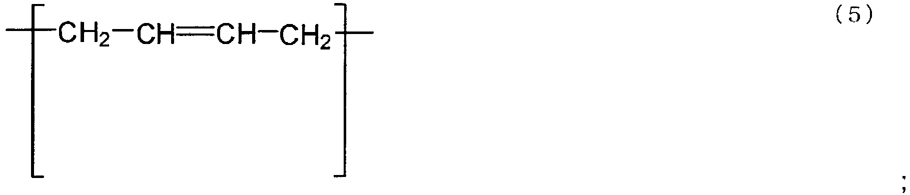
the polymer block I comprises 90 mol% or more of the styrene compound-derived units,
the polymer block II comprises 90 mol% or more of units derived from the diene compound 1,
the polymer block III comprises 90 mol% or more of units derived from the diene compound 1,
the polymer block IV comprises 90 mol% or more of units derived from the diene compound 2, and
the polymer block V comprises 90 mol% or more of units derived from the diene compound 2;
the component B is a polymer formed by polymerization of at least propylene, and is a polypropylene elastomer (excluding the component A) which does not show a peak having a heat of crystal melting of 1 J/g or more as measured by DSC (differential scanning calorimetry, heating rate 5°C/min) in the range of 20 to 250°C in accordance with JIS K7122,
the self-adhesive composition has a [tanδ]ₚₘₐₓ of 0.6 to 3.0 as measured by Standard Test 1 described below, and
when the [tanδ]ₚₘₐₓ is 0.6 or more and less than 1.1, the content of the component A is 60 to 80 wt% relative to the total of the components A and B taken as 100 wt%, and
when the [tanδ]ₚₘₐₓ is 1.1 to 3.0, the content of the component A is 50 to 80 wt% relative to the above total,
[Standard Test 1]
(1) the self-adhesive composition is formed into a 1 mm thick sheet with a press machine at 160°C and a pressure of 40 kgf/cm², and the sheet is cut to give a test sheet for the measurement of [tanδ]ₚₘₐₓ;
(2) the test sheet is tested on a viscoelastometer at a measurement frequency of 1 Hz, a swing angle γ of 0.05%, measurement temperatures of -30°C to 100°C and a heating rate of 5°C/min to record a tanδ vs. temperature curve, and a maximum value of a tanδ peak or peaks recorded at -30°C to 100°C is obtained as the [tanδ]ₚₘₐₓ of the self-adhesive composition.

## Patentansprüche

1. Selbsthaftende Zusammensetzung, umfassend:
ein Styrolelastomer (Komponente A),
ein amorphes Polypropylenelastomer (Komponente B) und
ein kristallines Polyolefin (Komponente C),
wobei die Komponente A ein hydriertes Produkt eines Blockcopolymers ist, gebildet durch Copolymerisation von:
einem Polymerblock I von Einheiten, abgeleitet von Styrol, wobei die Einheit des Polymers durch die folgende Formel (1) dargestellt ist: 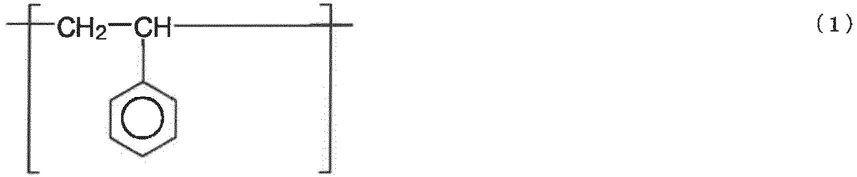
einem Polymerblock II, gebildet durch 1,2-Vinylpolymerisation von Isopren (Dienverbindung 1), wobei die Einheit des Polymers durch die folgende Formel (2) dargestellt ist: 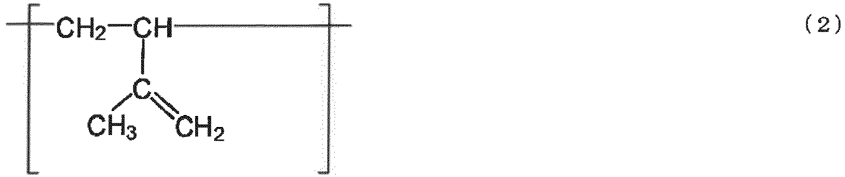
einem Polymerblock III mit Doppelbindungen in der Polymerhauptkette, gebildet durch 1,4-Additionspolymerisation von Isopren (Dienverbindung 1), wobei die Einheit des Polymers durch die folgende Formel (3) dargestellt ist: 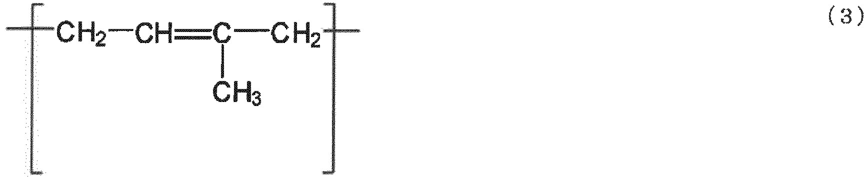
einem Polymerblock IV, gebildet durch 1,2-Vinylpolymerisation von 1,3-Butadien (Dienverbindung 2), wobei die Einheit des Polymers durch die folgende Formel (4) dargestellt ist: 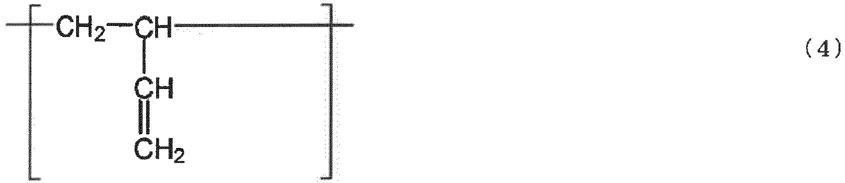
und einem Polymerblock V mit Doppelbindungen in der Polymerhauptkette, gebildet durch 1,4-Additionspolymerisation von 1,3-Butadien (Dienverbindung 2), wobei die Einheit des Polymers durch die folgende Formel (5) dargestellt ist: 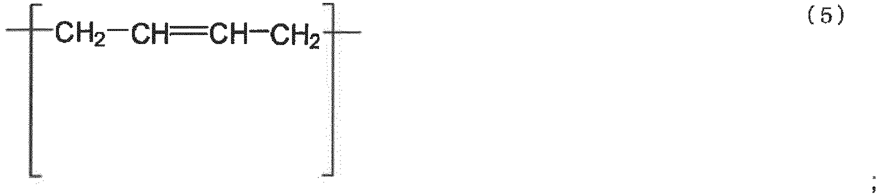
wobei der Polymerblock I 90 Mol-% oder mehr von den von einer Styrolverbindung abgeleiteten Einheiten umfasst,
der Polymerblock II 90 Mol-% oder mehr Einheiten, abgeleitet von der Dienverbindung 1, umfasst,
der Polymerblock III 90 Mol-% oder mehr Einheiten, abgeleitet von der Dienverbindung 1, umfasst,
der Polymerblock IV 90 Mol-% oder mehr Einheiten, abgeleitet von der Dienverbindung 2, umfasst und
der Polymerblock V 90 Mol-% oder mehr Einheiten, abgeleitet von der Dienverbindung 2, umfasst;
die Komponente B ein Polymer, gebildet durch Polymerisation von mindestens Propylen, ist und ein Polypropylenelastomer (mit Ausnahme der Komponente A), das keinen Peak mit einer Kristallschmelzwärme von 1 J/g oder mehr, gemessen durch DSC (Differentialscanningkalorimetrie, Erwärmungsrate 5°C/min) im Bereich von 20 bis 250°C gemäß JIS K7122, zeigt, ist,
die selbsthaftende Zusammensetzung einen [tanδ]ₚₘₐₓ von 1,1 bis 3,0 aufweist, gemessen durch den nachstehend beschriebenen Standardtest 1,
der Gehalt der Komponente A 50 bis 80 Gew.-%, bezogen auf die Gesamtheit der Komponenten A und B, genommen als 100 Gew.-%, beträgt,
die Gesamtheit der Komponenten A und C 60 bis 80 Gew.-%, bezogen auf 100 Gew.-% der Gesamtheit der Komponenten A, B und C, beträgt und
der Gehalt der Komponente C 5 bis 50 Gew.-%, bezogen auf 100 Gew.-% der Gesamtheit der Komponenten A und C, beträgt,
[Standardtest 1]
(1) die selbsthaftende Zusammensetzung wird mit einer Pressmaschine bei 160°C und einem Druck von 40 kgf/cm² zu einem 1 mm dicken Bogen geformt und der Bogen wird geschnitten, um einen Testbogen für die Messung von [tanδ]ₚₘₐₓ bereitzustellen;
(2) der Testbogen wird auf einem Viskoelastometer bei einer Messfrequenz von 1 Hz, einem Schwenkwinkel γ von 0,05%, Messtemperaturen von -30°C bis 100°C und einer Erwärmungsrate von 5°C/min untersucht, um eine tanδ-gegen-Temperatur-Kurve aufzuzeichnen, und ein Maximalwert von einem tanδ-Peak oder tanδ-Peaks, aufgezeichnet bei -30°C bis 100°C, wird als [tanδ]ₚₘₐₓ der selbsthaftenden Zusammensetzung erhalten.

2. Selbsthaftende Zusammensetzung nach Anspruch 1, wobei
die selbsthaftende Zusammensetzung weiter einen Weichmacher und/oder ein Klebrigmacherharz umfasst,
der Weichmacher mindestens einer ist, ausgewählt aus der Gruppe, bestehend aus Ölen, Paraffinwachsen, niedermolekularen Polybutenen, niedermolekularen Polyisoprenen, niedermolekularen Polyisobutylenen und niedermolekularen Polyolefinen, und
das Klebrigmacherharz mindestens eines ist, ausgewählt aus der Gruppe, bestehend aus Kolophoniumharzen, Terpenharzen, Cumaron-Inden-Harzen, Styrolharzen, aliphatischen, alicyclischen oder aromatischen Erdölharzen und hydrierten Produkten dieser Harze.

3. Selbsthaftende Zusammensetzung nach Anspruch 1 oder 2, weiter umfassend mindestens ein Mittel, ausgewählt aus der Gruppe, bestehend aus Antioxidantionsmitteln, UV-Absorbern, UV-Stabilisatoren, antistatischen Mitteln und Schmiermitteln.

4. Selbsthaftender Bogen, umfassend die selbsthaftende Zusammensetzung nach einem der Ansprüche 1 bis 3 auf mindestens einer Seite eines Bogensubstrats.

5. Selbsthaftender Bogen nach Anspruch 4, der ein selbsthaftender Bogen zum Schutz von Beschichtungen ist.

6. Selbsthaftender Bogen nach Anspruch 5, der ein selbsthaftender Bogen zum Schutz von Automobilbeschichtungen ist.

7. Verfahren zur Herstellung des selbsthaftenden Bogens nach Anspruch 5 oder 6, umfassend das Coextrudieren der selbsthaftenden Zusammensetzung und des Bogensubstrats in einer nebeneinander angeordneten Weise, um einen Stapel zu bilden, wobei
das Bogensubstrat eine thermoplastische Harzzusammensetzung umfasst,
die selbsthaftende Zusammensetzung einen MFR bei 230°C von nicht mehr als 60 g/10 min aufweist,
die Differenz zwischen dem MFR bei 230°C der selbsthaftenden Zusammensetzung und dem MFR bei 230°C der thermoplastischen Harzzusammensetzung nicht mehr als 50 g/10 min beträgt.

8. Verfahren zur Herstellung des selbsthaftenden Bogens nach Anspruch 7, wobei die Differenz zwischen den MFRs nicht mehr als 30 g/10 min beträgt.

9. Verwendung eines selbsthaftenden Bogens zum Schutz von Beschichtungen, umfassend eine selbsthaftende Zusammensetzung, umfassend:
ein Styrolelastomer (Komponente A) und
ein amorphes Polypropylenelastomer (Komponente B),
auf mindestens einer Seite eines Bogensubstrats,
wobei die Komponente A ein hydriertes Produkt eines Blockcopolymers ist, gebildet durch Copolymerisation von:
einem Polymerblock I von Einheiten, abgeleitet von Styrol, wobei die Einheit des Polymers durch die folgende Formel (1) dargestellt ist: 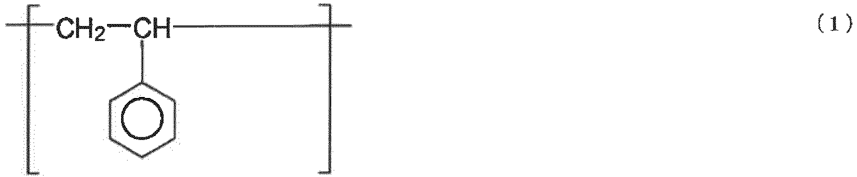
einem Polymerblock II, gebildet durch 1,2-Vinylpolymerisation von Isopren (Dienverbindung 1), wobei die Einheit des Polymers durch die folgende Formel (2) dargestellt ist: 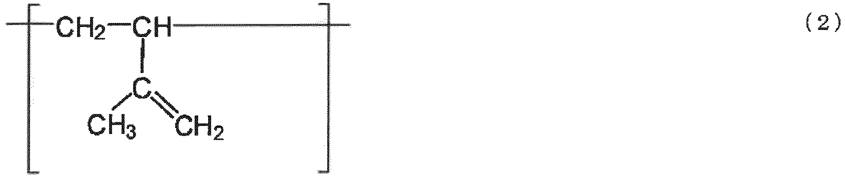
einem Polymerblock III mit Doppelbindungen in der Polymerhauptkette, gebildet durch 1,4-Additionspolymerisation von Isopren (Dienverbindung 1), wobei die Einheit des Polymers durch die folgende Formel (3) dargestellt ist: 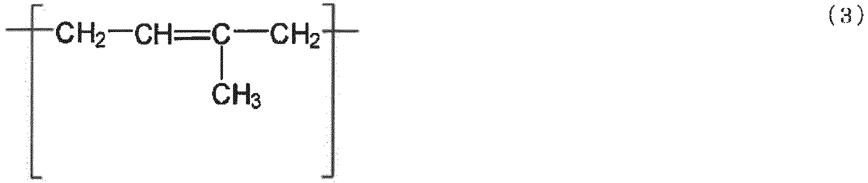
einem Polymerblock IV, gebildet durch 1,2-Vinylpolymerisation von 1,3-Butadien (Dienverbindung 2), wobei die Einheit des Polymers durch die folgende Formel (4) dargestellt ist: 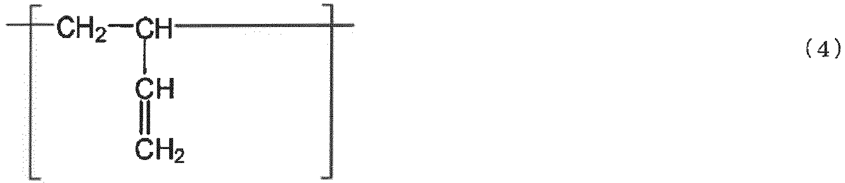
und einem Polymerblock V mit Doppelbindungen in der Polymerhauptkette, gebildet durch 1,4-Additionspolymerisation von 1,3-Butadien (Dienverbindung 2), wobei die Einheit des Polymers durch die folgende Formel (5) dargestellt ist: 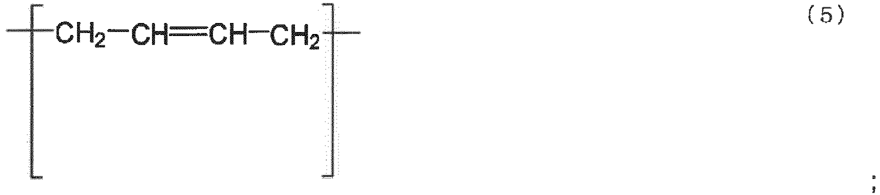
wobei der Polymerblock I 90 Mol-% oder mehr von den von einer Styrolverbindung abgeleiteten Einheiten umfasst,
der Polymerblock II 90 Mol-% oder mehr Einheiten, abgeleitet von der Dienverbindung 1, umfasst,
der Polymerblock III 90 Mol-% oder mehr Einheiten, abgeleitet von der Dienverbindung 1, umfasst,
der Polymerblock IV 90 Mol-% oder mehr Einheiten, abgeleitet von der Dienverbindung 2, umfasst und
der Polymerblock V 90 Mol-% oder mehr Einheiten, abgeleitet von der Dienverbindung 2, umfasst;
die Komponente B ein Polymer, gebildet durch Polymerisation von mindestens Propylen, ist und ein Polypropylenelastomer (mit Ausnahme der Komponente A), das keinen Peak mit einer Kristallschmelzwärme von 1 J/g oder mehr, gemessen durch DSC (Differentialscanningkalorimetrie, Erwärmungsrate 5°C/min) im Bereich von 20 bis 250°C gemäß JIS K7122, zeigt, ist,
die selbsthaftende Zusammensetzung einen [tanδ]ₚₘₐₓ von 0,6 bis 3,0 aufweist, gemessen durch den nachstehend beschriebenen Standardtest 1, und
wenn der [tanδ]ₚₘₐₓ 0,6 oder mehr und weniger als 1,1 beträgt, der Gehalt der Komponente A 60 bis 80 Gew.-%, bezogen auf die Gesamtheit der Komponenten A und B, genommen als 100 Gew.-%, beträgt und
wenn der [tanδ]ₚₘₐₓ 1,1 bis 3,0 beträgt, der Gehalt der Komponente A 50 bis 80 Gew.-%, bezogen auf die vorgenannte Gesamtheit, beträgt,
[Standardtest 1]
(1) die selbsthaftende Zusammensetzung wird mit einer Pressmaschine bei 160°C und einem Druck von 40 kgf/cm² zu einem 1 mm dicken Bogen geformt und der Bogen wird geschnitten, um einen Testbogen für die Messung von [tanδ]ₚₘₐₓ bereitzustellen;
(2) der Testbogen wird auf einem Viskoelastometer bei einer Messfrequenz von 1 Hz, einem Schwenkwinkel γ von 0,05%, Messtemperaturen von -30°C bis 100°C und einer Erwärmungsrate von 5°C/min untersucht, um eine tanδ-gegen-Temperatur-Kurve aufzuzeichnen, und ein Maximalwert von einem tanδ-Peak oder tanδ-Peaks, aufgezeichnet bei -30°C bis 100°C, wird als [tanδ]ₚₘₐₓ der selbsthaftenden Zusammensetzung erhalten.

## Revendications

1. Composition autoadhésive comprenant :
un élastomère de styrène (composant A),
un élastomère de polypropylène amorphe (composant B), et
une polyoléfine cristalline (composant C),
dans laquelle le composant A est un produit hydrogéné d'un copolymère séquencé formé par copolymérisation de :
un bloc de polymère I d'unités dérivées du styrène, dans laquelle l'unité du polymère est représentée par la Formule (1) ci-dessous : 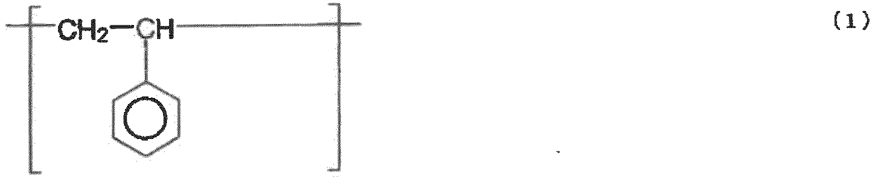
un bloc de polymère II formé par 1,2-vinyl polymérisation d'isoprène (composé de diène 1), dans laquelle l'unité du polymère est représentée par la Formule (2) ci-dessous : 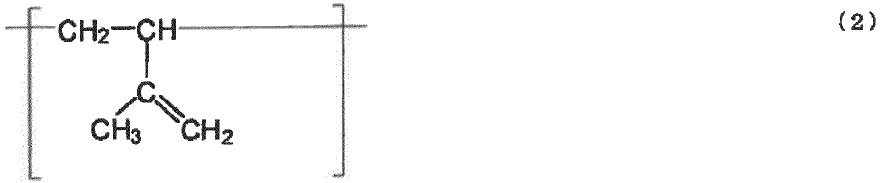
un bloc de polymère III ayant des doubles liaisons dans la chaîne principale de polymère, formé par polymérisation par 1,4-addition d'isoprène (composé de diène 1), dans laquelle l'unité du polymère est représentée par la Formule (3) ci-dessous : 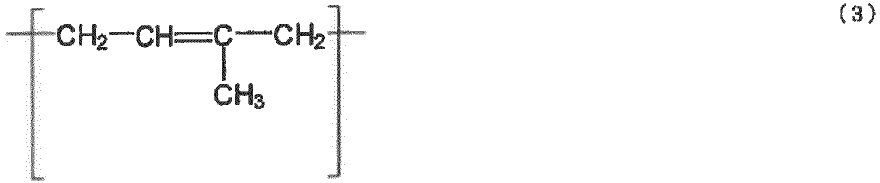
un bloc de polymère IV formé par 1,2-vinyl polymérisation de 1,3-butadiène (composé de diène 2), dans laquelle l'unité du polymère est représentée par la Formule (4) ci-dessous : 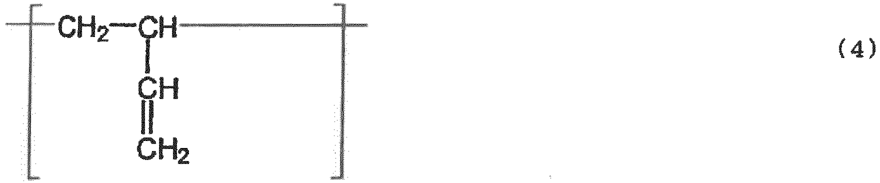
et un bloc de polymère V ayant des doubles liaisons dans la chaîne principale de polymère, formé par polymérisation par 1,4-addition de 1,3-butadiène (composé de diène 2), dans laquelle l'unité du polymère est représentée par la Formule (5) ci-dessous : 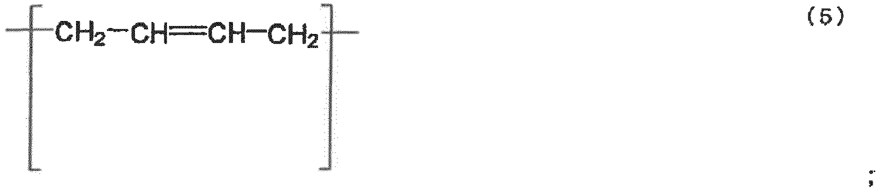
le bloc de polymère I comprend 90 % en mole ou plus des unités dérivées du composé de styrène,
le bloc de polymère II comprend 90 % en mole ou plus d'unités dérivées du composé de diène 1,
le bloc de polymère III comprend 90 % en mole ou plus d'unités dérivées du composé de diène 1,
le bloc de polymère IV comprend 90 % en mole ou plus d'unités dérivées du composé de diène 2, et
le bloc de polymère V comprend 90 % en mole ou plus d'unités dérivées du composé de diène 2 ;
le composant B est un polymère formé par polymérisation d'au moins du propylène, et est un élastomère de polypropylène (excluant le composant A) qui ne présente pas de crête ayant une chaleur de fusion cristalline de 1 J/g ou plus telle que mesurée par DSC (analyse calorimétrique différentielle, taux de chauffage 5°C/min) dans la plage de 20 à 250°C conformément à JIS K7122,
la composition autoadhésive a une [tanδ]ₚₘₐₓ de 1,1 à 3,0 telle que mesurée par l'Essai standard 1 décrit ci-dessous,
la teneur en le composant A est de 50 à 80 % en poids par rapport au total des composants A et B pris en tant que 100 % en poids,
le total des composants A et C est de 60 à 80 % en poids par rapport à 100 % en poids du total des composants A, B et C, et
la teneur en le composant C est de 5 à 50 % en poids par rapport à 100 % en poids du total des composants A et C,
[Essai standard 1]
(1) la composition autoadhésive est formée en une feuille de 1 mm d'épaisseur avec une presse à 160°C et une pression de 40 kgf/cm², et la feuille est découpée pour donner une feuille d'essai pour la mesure de [tanδ]ₚₘₐₓ ;
(2) la feuille d'essai est testée sur un viscoélastomètre à une fréquence de mesure de 1 Hz, un angle de balancement γ de 0,05 %, des températures de mesure de -30°C à 100°C et un taux de chauffage de 5°C/min pour enregistrer une courbe tanδ vs. température, et une valeur maximale d'une crête ou de crêtes tanδ enregistrées à -30°C à 100°C est obtenue en tant que la [tanδ]ₚₘₐₓ de la composition autoadhésive.

2. Composition autoadhésive selon la revendication 1, dans laquelle
la composition autoadhésive comprend en outre un plastifiant et/ou une résine tackifiante,
le plastifiant est au moins un sélectionné parmi le groupe constitué d'huiles, de cires de paraffine, de polybutènes à faible poids moléculaire, de polyisoprènes à faible poids moléculaire, de polyisobutylènes à faible poids moléculaire et de polyoléfines à faible poids moléculaire, et
la résine tackifiante est au moins une sélectionnée parmi le groupe constitué de résines de colophane, de résines de terpène, de résines de coumarone-indène, de résines de styrène, de résines de pétrole aliphatiques, alicycliques ou aromatiques, et de produits hydrogénés de ces résines.

3. Composition autoadhésive selon la revendication 1 ou 2, comprenant en outre au moins un agent sélectionné parmi le groupe constitué d'antioxydants, d'absorbeurs UV, de stabilisants anti-UV, d'agents antistatiques et de lubrifiants.

4. Feuille autoadhésive comprenant la composition autoadhésive selon l'une quelconque des revendications 1 à 3 sur au moins un côté d'un substrat de feuille.

5. Feuille autoadhésive selon la revendication 4, qui est une feuille autoadhésive pour la protection de revêtements.

6. Feuille autoadhésive selon la revendication 5, qui est une feuille autoadhésive pour la protection de revêtements automobiles.

7. Procédé de production de la feuille autoadhésive selon la revendication 5 ou 6, comprenant la coextrusion de la composition autoadhésive et du substrat de feuille côte à côte pour former une pile, dans lequel
le substrat de feuille comprend une composition de résine thermoplastique,
la composition autoadhésive a un indice de fluidité MFR à 230°C de pas plus de 60 g/10 min,
la différence entre le MFR à 230°C de la composition autoadhésive et le MFR à 230°C de la composition de résine thermoplastique est de pas plus de 50 g/10 min.

8. Procédé de production de la feuille autoadhésive selon la revendication 7, dans lequel la différence entre les MFR est de pas plus de 30 g/10 min.

9. Utilisation d'une feuille autoadhésive pour la protection de revêtements comprenant une composition autoadhésive comprenant :
un élastomère de styrène (composant A), et
un élastomère de polypropylène amorphe (composant B),
sur au moins un côté d'un substrat de feuille,
dans laquelle le composant A est un produit hydrogéné d'un copolymère séquencé formé par copolymérisation de :
un bloc de polymère I d'unités dérivées du styrène, dans laquelle l'unité du polymère est représentée par la Formule (1) ci-dessous : 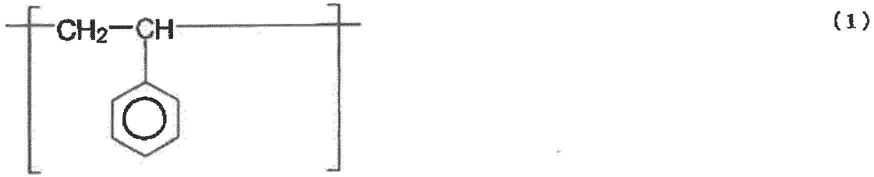
un bloc de polymère II formé par 1,2-vinyl polymérisation d'isoprène (composé de diène 1), dans laquelle l'unité du polymère est représentée par la Formule (2) ci-dessous : 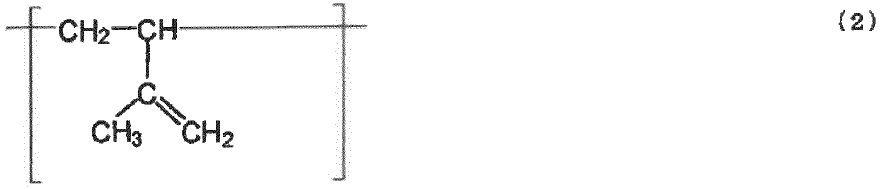
un bloc de polymère III ayant des doubles liaisons dans la chaîne principale de polymère, formé par polymérisation par 1,4-addition d'isoprène (composé de diène 1), dans laquelle l'unité du polymère est représentée par la Formule (3) ci-dessous : 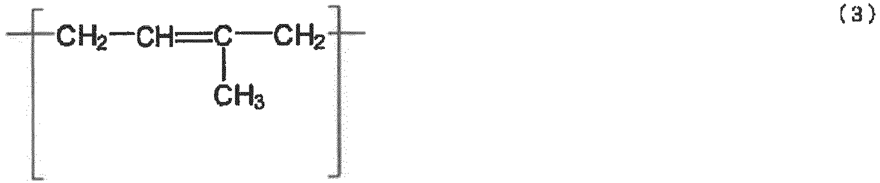
un bloc de polymère IV formé par 1,2-vinyl polymérisation de 1,3-butadiène (composé de diène 2), dans laquelle l'unité du polymère est représentée par la Formule (4) ci-dessous : 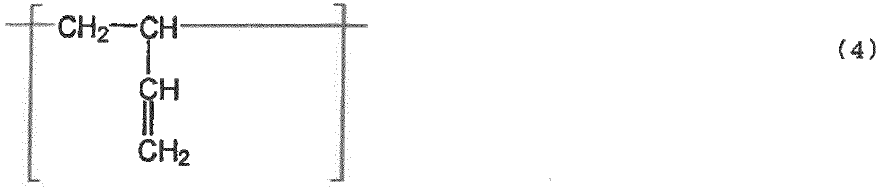
et un bloc de polymère V ayant des doubles liaisons dans la chaîne principale de polymère, formé par polymérisation par 1,4-addition de 1,3-butadiène (composé de diène 2), dans laquelle l'unité du polymère est représentée par la Formule (5) ci-dessous : 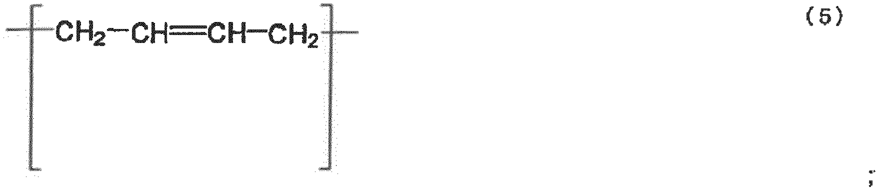
le bloc de polymère I comprend 90 % en mole ou plus des unités dérivées du composé de styrène,
le bloc de polymère II comprend 90 % en mole ou plus d'unités dérivées du composé de diène 1,
le bloc de polymère III comprend 90 % en mole ou plus d'unités dérivées du composé de diène 1,
le bloc de polymère IV comprend 90 % en mole ou plus d'unités dérivées du composé de diène 2, et
le bloc de polymère V comprend 90 % en mole ou plus d'unités dérivées du composé de diène 2 ;
le composant B est un polymère formé par polymérisation d'au moins du propylène, et est un élastomère de polypropylène (excluant le composant A) qui ne présente pas de crête ayant une chaleur de fusion cristalline de 1 J/g ou plus telle que mesurée par DSC (analyse calorimétrique différentielle, taux de chauffage 5°C/min) dans la plage de 20 à 250°C conformément à JIS K7122,
la composition autoadhésive a une [tanδ]ₚₘₐₓ de 0,6 à 3,0 telle que mesurée par l'Essai standard 1 décrit ci-dessous, et
lorsque la [tanδ]ₚₘₐₓ est de 0,6 ou plus et moins de 1,1, la teneur en le composant A est de 60 à 80 % en poids par rapport au total des composants A et B pris en tant que 100 % en poids, et
lorsque la [tanδ]ₚₘₐₓ est de 1,1 à 3,0, la teneur en le composant A est de 50 à 80 % en poids par rapport au total ci-dessus,
[Essai standard 1]
(1) la composition autoadhésive est formée en une feuille de 1 mm d'épaisseur avec une presse à 160°C et une pression de 40 kgf/cm², et la feuille est découpée pour donner une feuille d'essai pour la mesure de [tanδ]ₚₘₐₓ ;
(2) la feuille d'essai est testée sur un viscoélastomètre à une fréquence de mesure de 1 Hz, un angle de balancement γ de 0,05 %, des températures de mesure de -30°C à 100°C et un taux de chauffage de 5°C/min pour enregistrer une courbe tanδ vs. température, et une valeur maximale d'une crête ou de crêtes tanδ enregistrées à -30°C à 100°C est obtenue en tant que la [tanδ]ₚₘₐₓ de la composition autoadhésive.
